(19) Europäisches Patentamt
European Patent Office
Office européen des brevets

(11) **EP 1 522 870 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
***G01S 7/487*** *(2006.01)* ***G01S 17/10*** *(2006.01)*

(21) Anmeldenummer: **03022401.8**

(22) Anmeldetag: **06.10.2003**

(54) **Entfernungsmessung**

Distance measurement

Mesure de distance

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**13.04.2005 Patentblatt 2005/15**

(73) Patentinhaber: **Triple-IN Holding AG**
**6300 Zug (CH)**

(72) Erfinder:
• **Hipp, Johann**
**22391 Hamburg (DE)**
• **Hipp, Jörg**
**8002 Zürich (CH)**

(74) Vertreter: **Manitz, Finsterwald & Partner GbR**
**Postfach 31 02 20**
**80102 München (DE)**

(56) Entgegenhaltungen:
**EP-A2- 0 805 359 WO-A1-02/088772**
**DE-A- 19 637 010 US-A- 4 586 043**
**US-A1- 2003 035 097**

• **F.E. NATHANSON ET AL.: "Radar Design Principles" 1991, SCITECH PUBLISHING, INC. , MENDHAM, NJ, USA , XP002272505 * Seite 80 - Seite 83 ***

EP 1 522 870 B1

**Beschreibung**

Die Erfindung betrifft ein Verfahren zur Entfernungsmessung mit den Merkmalen des Anspruchs 1.

Die Erfindung betrifft außerdem eine Vorrichtung zur Entfernungsmessung mit den Merkmalen des Anspruchs 16.

Verfahren und Vorrichtungen zur Entfernungsmessung sind grundsätzlich bekannt.

Bei der Entfernungsmessung möchte man zum einen möglichst genaue Entfernungswerte erhalten. Zum anderen wird eine möglichst hohe Empfindlichkeit der Messanordnung angestrebt, um auch Signale mit einer vergleichsweise kleinen Amplitude nachweisen zu können, die beispielsweise von weit entfernten Objekten oder von Objekten mit einer niedrigen Reflektivität stammen.

Bekannte Methoden zur Entfernungsmessung durch Bestimmen der Pulslaufzeit lassen sich hinsichtlich des ihnen zugrunde liegenden prinzipiellen Ansatzes voneinander unterscheiden, wobei im Wesentlichen zwei verschiedene Ansätze für die Zeitmessung Verwendung finden.

Ein Ansatz wird als "kontinuierliche Messung" bezeichnet. Bei der kontinuierlichen Messung wird das gesamte analoge Empfangssignal abgetastet, d.h. mit einer der verwendeten Abtastrate entsprechenden Genauigkeit wird das Empfangssignal "kontinuierlich" vermessen. Dabei ist es üblich, mehrere Messungen durchzuführen und mit einer hohen festen Abtastrate für jede Messstelle, d.h. an jeder Abtaststelle im Empfangssignal, einen Mittelwert über die durchgeführten Messungen zu bilden, um auf diese Weise das auch als S/N bezeichnete Signal/Rausch-Verhältnis zu verbessern. Aus der sich hieraus ergebenden quasi-kontinuierlichen Amplitude lassen sich die eigentlich interessierenden Signalpulse rekonstruieren, d.h. vom Rauschen trennen, um so die für die Entfernungsmessung erforderliche Zeitmessung anhand der rekonstruierten Signalpulse durchführen zu können.

Von Vorteil bei der kontinuierlichen Messung sind die damit erzielbare hohe Genauigkeit sowie die hohe Empfindlichkeit. Nachteilig sind die erheblichen technischen Probleme hinsichtlich des erforderlichen Abtast-, Speicher- und Rechenaufwandes, die gelöst werden müssen. Der Grund für diese Probleme ist die enorm große Datenmenge, die beim Abtasten des gesamten Empfangssignals und der anschließenden Auswertung bewältigt werden muss.

Ein alternativer Ansatz bei der Zeitmessung ist die so genannte "Event-Messung", bei der nicht das gesamte analoge Empfangssignal ausgewertet, sondern das Empfangssignal über einen Komparator geführt wird, der dafür sorgt, dass lediglich eine eingestellte Komparatorschwelle übersteigende Signalanteile bzw. Zeitpunkte detektiert und ausgewertet werden. Im Gegensatz zur kontinuierlichen Messung wird bei der Event-Messung folglich eine Datenflut von vornherein dadurch vermieden, dass Messwerte nur für die eigentlich interessierenden Ereignisse ("Events"), insbesondere für die über der Komparatorreferenz liegenden Signalpulse aufgenommen werden.

Ein Vorteil der Event-Messung besteht darin, dass sich durch Mittelung einer Mehrzahl von Messungen eine hohe Genauigkeit erzielen lässt und dabei nur eine sehr kleine Datenmenge bewältigt werden muss. Nachteilig ist, dass die Event-Messung naturgemäß keine Verbesserung der Empfindlichkeit ermöglicht, da die Empfindlichkeit durch die Lage der Komparatorschwelle festgelegt ist, die einen bestimmten Abstand der interessierenden Signalpulse vom Rauschen voraussetzt und entsprechend diesem Signal/Rausch-Abstand eingestellt werden muss. Ein weiterer Nachteil der Event-Messung besteht darin, dass ohne aufwändige Erweiterung der Auswerteelektronik lediglich ein einziger, auch als Echo bezeichneter Signalpuls pro ausgesandtem Strahlungspuls ausgewertet werden kann, da der ausgesandte Strahlungspuls die Zeitmessung startet und das Echo, d.h. der am Empfänger nachgewiesene Signalpuls, die Zeitmessung stoppt.

Verfahren und Vorrichtungen zur Entfernungsmessung sind aus US 2003/035097 A1, EP 0 805 359 A2 und WO 02/088772 A1.

Es ist momentan auf dem Gebiet der Entfernungsmessung durch Pulslaufzeitbestimmung keine Messmethode bekannt, die auf der Basis einer vertretbaren Datenmenge gleichzeitig eine hohe Genauigkeit liefert und eine hohe Empfindlichkeit bietet.

Aufgabe der Erfindung ist es, bei der Entfernungsmessung durch Bestimmen der Pulslaufzeit die Möglichkeit zu schaffen, eine hohe Genauigkeit der Entfernungsmessung bei gleichzeitig hoher Empfindlichkeit zu realisieren, wobei insbesondere die Auswertung mehrerer Signalpulse pro ausgesandtem Strahlungspuls möglich, d.h. eine Mehrecho-Fähigkeit gegeben, und es außerdem möglich sein soll, die Form der Signalpulse analysieren, also beliebig geformte Reflexionssignale verarbeiten zu können.

Die Lösung dieser Aufgabe erfolgt erfindungsgemäß durch die Merkmale des unabhängigen Verfahrensanspruchs 1 sowie durch die Merkmale des unabhängigen Vorrichtungsanspruchs 16.

Bei dem erfindungsgemäßen Verfahren ist demnach vorgesehen, dass mit dem Empfänger das Rauschen gemessen wird, wobei Zeitpunkte bestimmt werden, an denen wenigstens eine im Rauschen liegende Schwelle des Empfängers durchbrochen wird, und wobei durch Mittelung einer Mehrzahl von jeweils die bestimmten Zeitpunkte umfassenden Einzelmessungen von den Signalpulsen hervorgerufene Veränderungen des Rauschens nachgewiesen werden.

Anders als bei der eingangs erläuterten Event-Messung wird erfindungsgemäß folglich gezielt das Rauschen und nicht lediglich ein weit über das Rauschen hinaus ragendes Signal gemessen. Anders als bei der ebenfalls eingangs erläuterten kontinuierlichen Messung wird erfindungsgemäß jedoch nicht das gesamte analoge Empfangssignal des Empfängers kontinuierlich abgetastet, sondern es werden mit den Zeitpunkten, an denen die im Rauschen liegende Schwelle des Empfängers durchstoßen wird, gezielt bestimmte charakteristische Stellen ("Events") des Empfangssignals ausgewählt. Nur diese ausgewählten Stellen des Empfangssignals werden einer weiteren Auswertung unterzogen.

Diese weitere Auswertung umfasst erfindungsgemäß eine Mittelung mehrerer Einzelmessungen, wobei jedoch bei der Erfindung diese Einzelmessungen - anders als bei der kontinuierlichen Messung - nicht eine enorm große, durch die Abtastrate bestimmte Anzahl von Messpunkten des analogen Empfangssignals, sondern eben nur die charakteristischen Zeitpunkte enthalten. Die der Mittelung unterzogenen Einzelmessungen repräsentieren also jeweils nicht das gesamte Empfangssignal, sondern bilden mit den bestimmten Zeitpunkten nur einen zwar kleinen, dafür aber charakteristischen und eindeutig definierten Teil des analogen Empfangssignals ab.

Hierdurch wird mit der Erfindung eine drastische Reduzierung der Datenmenge erzielt, ohne jedoch - wie bei der Event-Messung - auf im analogen Empfangssignal vorhandene Informationen zu verzichten. Da erfindungsgemäß die Schwelle des Empfängers im Rauschen liegt, wird das gesamte Empfangssignal bei der Auswertung berücksichtigt und nicht lediglich ein ausreichend weit über das Rauschen hinaus ragendes Signal.

Durch die erfindungsgemäße Beschränkung auf die charakteristischen Zeitpunkte im Empfangssignal des Empfängers bleibt lediglich die Amplitude der Rauschpulse unberücksichtigt. Dies stellt jedoch deshalb kein Problem dar, da in denjenigen Zeitbereichen, in denen ausschließlich Rauschen, aber kein Signal vorliegt, bei der erfindungsgemäßen Mittelung die Rauschpulse gewissermaßen "weggemittelt" werden. In diesen Zeitbereichen wird also der Umstand ausgenutzt, dass die Rauschpulse statistisch verteilt sind, d.h. positive und negative Rauschpulse ein festes, von der Lage der Schwelle des Empfängers abhängiges Wahrscheinlichkeitsverhältnis aufweisen, z.B. im Fall einer bei 0 NEP liegenden Empfängerschwelle gleich wahrscheinlich sind. Dabei bezeichnet "NEP" ("noise equivalent power") diejenige Leistung, die dem Effektivwert des Rauschens entspricht.

In denjenigen Zeitbereichen dagegen, in denen ein Signal vorhanden ist, wird erfindungsgemäß der Umstand ausgenutzt, dass das Rauschen durch das Signal beeinflusst wird, d.h. die Rauschpulse durch die Überlagerung mit dem Signal verändert werden. Dieser Umstand bedeutet, dass im Bereich eines Signals die Rauschkurve aufgrund des Signals ins Positive verschoben wird, was zu einer Verbreiterung der Rauschpulse führt und damit die Wahrscheinlichkeit dafür erhöht, dass die Schwelle des Empfängers überschritten, also das Vorhandensein eines positiven Signalanteils nachgewiesen werden kann.

Diese Wahrscheinlichkeitserhöhung oder Asymmetrie macht sich bei der erfindungsgemäßen Mittelung dahingehend bemerkbar, dass in den Bereichen reinen Rauschens die Rauschpulse auf einen mittleren Wert gebracht werden, wohingegen in den Bereichen, in denen ein Signal vorhanden ist, die von diesem Signal hervorgerufene Wahrscheinlichkeitserhöhung als ein höherer Wert gemessen werden kann, also als ein Wert, der über dem mittleren Wert des Rauschens liegt. Bei der erfindungsgemäßen Mittelung verringert sich also das Rauschen, während das Signal in seiner Höhe unverändert bleibt.

Dieser durch die Erfindung ausgenutzte Umstand ist unabhängig von der insbesondere durch die Beschaffenheit des die ausgesandten Strahlungspulse reflektierenden Objektes bestimmte Form des Signals. Sowohl einzelne Signalpulse mit gegenüber der Messzeit kurzer Dauer einerseits also auch kontinuierliche Signale mit über ihre Dauer beliebig verlaufender, von Null verschiedener Amplitude andererseits verschieben die Rauschkurve ins Positive und sind somit mittels des erfindungsgemäßen Verfahrens nachweisbar. Während dies bei einem kurzen Signalpuls lediglich "lokal" erfolgt, verschiebt ein breiteres Signal die Rauschkurve in dem betreffenden Zeitbereich als Ganzes. Im Sinne der Erfindung ist auch ein solches breites Signal als "Signalpuls" und eine solche Verschiebung der Rauschkurve als Ganzes als "Veränderung des Rauschens" zu verstehen.

Von besonderem Vorteil bei der Erfindung ist, dass das vorstehend Erläuterte außerdem für Signale beliebiger Größe und insbesondere auch für solche Signale gilt, die im Rauschen liegen, d.h. deren Amplitude kleiner und insbesondere wesentlich kleiner als die durchschnittliche Amplitude der Rauschpulse ist. Derart kleine Signale können mit der eingangs erläuterten Event-Messung nicht nachgewiesen werden. Auch große Signale überlagern zwar das Rauschen. Dieser Umstand spielt bei der Event-Messung aber praktisch keine Rolle, da hier ohnehin nur solche Signale detektiert werden, die deutlich über dem Rauschen liegen, d.h. hier nicht das Rauschen gemessen wird.

Ein weiterer großer Vorteil der Erfindung ist, dass quasi automatisch eine Mehrecho-Fähigkeit gegeben ist, da das gesamte analoge Empfangssignal berücksichtigt wird.

Da erfindungsgemäß die Mittelung der Einzelmessungen lediglich auf der Grundlage der vergleichsweise wenigen charakteristischen Zeitpunkte durchgeführt wird, ermöglicht die Erfindung eine drastische Empfindlichkeitssteigerung, ohne dass gleichzeitig ein entsprechend großer Mess- und Auswerteaufwand erforderlich ist. Von einer praktisch realisierbaren Konfiguration einer Entfernungsmessvorrichtung ausgehende Untersuchungen haben ergeben, dass bei einer mitten im Rauschen liegenden Empfängerschwelle etwa 60 Rauschpulse pro 100 m Reichweite zu erwarten sind.

Die erfindungsgemäße Empfindlichkeitssteigerung eröffnet eine Fülle von neuen, bislang nicht möglichen Sensorkonstruktionen und Anwendungen zur Entfernungsmessung, auf die an anderer Stelle näher eingegangen werden soll.

Dieser Vorstoß in bislang unerreichte Bereiche wird - anschaulich ausgedrückt - also dadurch erreicht, dass sich die Erfindung die Vorteile einer vollen Informationsausnutzung durch Berücksichtigung des gesamten analogen Empfangssignals - insofern wie bei der kontinuierlichen Messung - und die Vorteile einer Datenreduktion durch Beschränken auf charakteristische Ereignisse - insofern wie bei der Event-Messung - zu Eigen macht. Dies erfolgt erfindungsgemäß dadurch, dass das analoge Empfangssignal einerseits zwar kontinuierlich, andererseits aber nur bezüglich der durch die bestimmten Zeitpunkte repräsentierten Ereignisse ausgewertet wird.

Aus diesem Grund wird die Erfindung auch als "kontinuierliche Event-Messung", abgekürzt KEM, bezeichnet.

Bevorzugte Ausführungsformen der Erfindung sind in den Unteransprüchen, der Beschreibung sowie der Zeichnung angegeben.

Erfindungsgemäß kann für jeden ausgesandten Strahlungspuls eine Einzelmessung erzeugt werden. Durch die erfindungsgemäße Beschränkung auf die charakteristischen Zeitpunkte steht auch bei hohen Pulsfrequenzen jeweils zwischen der Aussendung zweier aufeinander folgender Strahlungspulse genügend Zeit zur Verfügung, um die aus dem früheren Strahlungspuls resultierende Einzelmessung verarbeiten zu können.

Die Lage der Schwelle des Empfängers kann an den jeweiligen Anwendungsfall angepasst werden. Je weiter die Schwelle des Empfängers in das Rauschen hinein gelegt wird, d.h. je niedriger die Schwelle eingestellt wird, desto kleiner sind die Signale, die noch nachgewiesen werden können. Gleichzeitig steigt aber der Mittelungsaufwand, der betrieben werden muss, um die kleinen Signale vom Rauschen zu trennen, da die Schwelle des Empfängers von den Flanken der Rauschpulse umso häufiger durchbrochen wird, d.h. die Einzelmessungen eine umso größere Anzahl von Zeitpunkten umfassen, je niedriger die Schwelle des Empfängers eingestellt ist. Der Gewinn an Empfindlichkeit erfolgt also um den Preis eines höheren Mittelungsaufwands, wobei aber erfindungsgemäß dieser Mittelungsaufwand immer noch Größenordnungen unter demjenigen der eingangs erläuterten kontinuierlichen Messung liegt, da selbst im Fall einer bei 0 NEP liegenden Schwelle des Empfängers erfindungsgemäß weiterhin lediglich die bestimmten charakteristischen Zeitpunkte verwendet werden.

Die Schwelle des Empfängers kann in Abhängigkeit von dem jeweiligen Anwendungsfall unterschiedlich eingestellt werden, insbesondere in Abhängigkeit von dem Mittelungsaufwand und/oder von der Nachweisempfindlichkeit. Als Maß für eine vorzunehmende Änderung der Empfängerschwelle kann beispielsweise die Anzahl von Rauschpulsen pro Zeiteinheit - unter Berücksichtigung der Lichtgeschwindigkeit also pro Längeneinheit - dienen. Dieses Maß kann aus den Messwerten abgeleitet werden, z.B. aus der Dichte der bestimmten Zeitpunkte in den Einzelmessungen.

Vorzugsweise erfolgen die Erzeugung und die Mittelung der Einzelmessungen sowie der Nachweis der Veränderungen des Rauschens mittels eines softwaregestützten Auswerteverfahrens.

Des Weiteren ist vorgesehen, dass mittels der im Rauschen liegenden Schwelle des Empfängers aus dem analogen Empfangssignal, das Rauschpulse und/oder durch die Signalpulse veränderte Rauschpulse enthält, eine Folge von logischen Pulsen erzeugt wird, aus der die Einzelmessung abgeleitet wird. Diese Folge von logischen Pulsen wird auch als logische Messung bezeichnet. Die logische Messung enthält nur noch Informationen über die Zeitpunkte, an denen die Schwelle des Empfängers von dem auch als analoge Messung bezeichneten Empfangssignal durchbrochen wurde.

Hierdurch wird eine drastische Datenreduktion erzielt, wobei aber die wichtigen, Informationen über das gesuchte Signal enthaltenden Daten gerade nicht verloren gehen, da sich die durch das Signal hervorgerufene Veränderung des Rauschens aufgrund der im zeitlichen Bereich des Signals erfolgenden Verbreiterung der Rauschpulse unmittelbar auf die Lage der Durchbrechungszeitpunkte auswirkt. Bei dieser geschickten Datenreduktion bleibt folglich nur das unberücksichtigt, was nicht benötigt wird.

Es sind die Flanken der logischen Pulse, die erfindungsgemäß als Zeitpunkte der Einzelmessung verwendet werden.

Des Weiteren wird erfindungsgemäß vorgeschlagen, dass die Zeitpunkte der Einzelmessung in wenigstens einen Speicher des Empfängers geschrieben werden. Derjenige Speicher, in den jede Einzelmessung unmittelbar nach ihrer Erzeugung vorübergehend geschrieben wird, ist vorzugsweise Bestandteil eines IC-Bausteins.

Vorzugsweise werden die Zeitpunkte der Einzelmessung zunächst in einem Speicher, insbesondere einem Speicher eines IC-Bausteins, zwischengespeichert und anschließend in einen weiteren Speicher, insbesondere einen Zeitrasterspeicher, übertragen, wobei in dem weiteren Speicher die Zeitpunkte in einer ihre jeweilige Zeitinformation berücksichtigenden Anordnung abgelegt werden. Bevorzugt werden die Zeitpunkte in dem einen Speicher durch Zahlen, die insbesondere Zählerständen eines während der Messung die Takte eines Taktgeber zählenden Zählers entsprechen, und in dem weiteren Speicher durch Speicheradressen repräsentiert, wobei eine eindeutige Zuordnung zwischen Zahlen und Speicheradressen besteht.

Ferner ist vorgesehen, dass die Mittelung der Einzelmessungen in wenigstens einem Zeitrasterspeicher durchgeführt wird, wobei vorzugsweise für alle zu mittelnden Einzelmessungen der gleiche Zeitrasterspeicher verwendet wird, und wobei die entsprechende Speicherzelle des Zeitrasterspeichers im Fall einer aufsteigenden Pulsflanke um einen Wert n erhöht und im Fall einer abfallenden Flanke um den Wert n vermindert wird, oder umgekehrt, wobei bevorzugt für n der Wert 1 verwendet wird.

Derjenige Zeitrasterspeicher, in dem die Mittelung der Einzelmessungen erfolgt, ist vorzugsweise mit demjenigen Speicher, in den die Einzelmessungen jeweils zunächst eingebracht werden, nicht identisch, sondern Bestandteil eines Prozessorsystems, das mit einem den ersten Speicher umfassenden IC-Baustein über eine Parallelschnittstelle verbunden ist.

Es wird bei der Mittelung der Einzelmessungen ein Zeitraster verwendet, in welchem die Messzeit in eine Vielzahl von aufeinander folgenden Zeitfenstern unterteilt ist. Dabei ist für jeden der verwendeten Zeitrasterspeicher jedem Zeitfenster eine Speicherzelle zugeordnet, so dass die in die aufeinander folgenden Zeitfenster unterteilte Messzeit bzw. die während der Messzeit bestimmten charakteristischen Zeitpunkte in den Zeitrasterspeichern abgebildet werden können.

Die Mittelung der Einzelmessungen kann also dadurch erfolgen, dass innerhalb des gleichen Zeitrasterspeichers für jedes Zeitfenster die Anzahl von Durchbrechungen der Schwelle des Empfängers insbesondere vorzeichenrichtig gezählt oder gemittelt wird, indem der Wert der betreffenden Speicherzelle jeweils entsprechend verändert wird.

Nachdem die letzte der zu mittelnden Einzelmessungen berücksichtigt wurde, kann für jedes Zeitfenster die Zahl der ermittelten Durchbrechungen der Empfängerschwelle durch die auch als Mittelungstiefe bezeichnete Anzahl der gemittelten Einzelmessungen dividiert werden, womit die Mittelung der Einzelmessungen abgeschlossen ist. Alternativ ist es möglich, für jedes Zeitfenster bei jeder in diesem Zeitfenster auftretenden Durchbrechung der Empfängerschwelle die entsprechende Speicherzelle des Zeitrasterspeichers um den Wert "1/Mittelungstiefe" zu erhöhen oder zu vermindern, d.h. die Division durch die Anzahl der gemittelten Einzelmessungen vorzunehmen, bevor der Zeitrasterspeicher beschrieben wird.

Des Weiteren ist erfindungsgemäß vorgesehen, dass im Anschluss an die Mittelung der Einzelmessungen der Mittelwert zu einer Amplitudenfunktion integriert wird. Die Amplitudenfunktion wird im Folgenden auch als Software-Amplitude oder SW-Amplitude bezeichnet. Während die Einzelmessungen jeweils die zeitliche Ableitung der aus der analogen Messung über die Durchstoßstellen der Empfängerschwelle erhaltenen logischen Messung darstellen und somit die Mittelung der Einzelmessungen gewissermaßen in der "differenzierten Welt" stattfindet, d.h. Ableitungen der logischen Amplituden nach der Zeit gebildet werden, um durch die hiermit erzielte Datenreduktion eine drastische Ersparnis an Rechen-, Speicher- und Auswerteaufwand zu erzielen, stellt die anschließende Integration des Ergebnisses der Mittelung der Einzelmessungen gewissermaßen die Rückkehr in die "reale Welt" dar, d.h. es liegen wieder Amplituden als Funktion der Zeit vor. Dabei wurde jedoch durch die Mittelung der Einzelmessungen das Rauschen gegenüber dem Signal um ein insbesondere durch die Mittelungstiefe, d.h. durch die Anzahl der gemittelten Einzelmessungen, bestimmtes Maß herabgesetzt.

Da ein vollständiges "Herausmitteln" des reinen Rauschens nur durch Mittelung unendlich vieler Einzelmessungen erreichbar wäre, ist auch die Amplitudenfunktion in den zeitlichen Bereichen reinen Rauschens nicht exakt glatt. Gemäß einer bevorzugten Weiterbildung der Erfindung kann die Empfindlichkeit aber weiter dadurch gesteigert werden, dass die Bandbreite der Amplitudenfunktion herabgesetzt wird, indem in der Amplitudenfunktion z.B. jeweils über eine vorgegebene Anzahl aufeinander folgender Zeitfenster gemittelt wird. Eine solche auch als horizontale Mittelung bezeichnete Maßnahme führt zu einer Glättung der Amplitudenfunktion, wodurch insbesondere Rauschen infolge von Quantisierung reduziert wird.

Um die von den Signalen hervorgerufenen Veränderungen des Rauschens nachzuweisen, wird auf die Amplitudenfunktion eine Nachweisschwelle angewendet. Da sich das erfindungsgemäße Verfahren vorzugsweise spätestens von der Mittelung der Einzelmessungen an im Rahmen einer softwaregestützten Auswertung abspielt, d.h. alle Operationen softwaremäßig erfolgen, wird die auf die Amplitudenfunktion angewendete Nachweisschwelle auch als Software-Schwelle oder kurz SW-Schwelle bezeichnet.

Durch das Herabsetzen des Rauschens aufgrund der mit den Einzelmessungen durchgeführten Mittelung ragen in der Amplitudenfunktion auch solche Signalpulse, die in der analogen Messung "im Rauschen untergegangen" waren und lediglich zu einer Veränderung des Rauschens führten, aus dem durch die Mittelung herabgesetzten Rauschen, das auch als Software-Rauschen bezeichnet werden kann, heraus.

Mittels der SW-Schwelle können nunmehr die aus dem (Software-)Rauschen heraus ragenden Signalpulse auf einfache Weise identifiziert werden. Anschaulich gesprochen wird - in Anlehnung an die eingangs erläuterte Event-Messung - in der Amplitudenfunktion zur Identifizierung der gesuchten Signale also gewissermaßen eine solche "Event-Messung" durchgeführt, wobei dies aber zum einen softwaremäßig und zum anderen nicht an dem analogen Ausgangssignal eines Verstärkers, sondern an einem rein abstrakten Gebilde - nämlich der Amplitudenfunktion - erfolgt, die aus diskret verteilten Zeitpunkten des ursprünglichen analogen Signals gewonnen wurde.

Es wird in der Amplitudenfunktion für die Signalpulse jeweils die zugehörige Objektentfernung auf der Basis wenigstens eines Zeitpunktes bestimmt, an dem die Nachweisschwelle durchbrochen wird. Bei diesem Zeitpunkt handelt es sich insbesondere um den Zeitpunkt, an dem die vordere oder aufsteigende Flanke des Signalpulses die Nachweisschwelle durchstößt.

Da der mittels der Nachweis- oder SW-Schwelle bestimmte Zeitpunkt als Grundlage für die Entfernungsmessung dient und sich Ungenauigkeiten bei der Bestimmung dieses Zeitpunktes unmittelbar auf die daraus berechnete Objektentfernung auswirken, kann gemäß einer bevorzugten Weiterbildung der Erfindung die Genauigkeit gesteigert werden, wenn in der Amplitudenfunktion zur Bestimmung von Fußpunkten der Signalpulse jeweils im Bereich der aufsteigenden und/oder abfallenden Flanke des Signalpulses eine Extrapolation des Rauschens durchgeführt, eine hierbei erhaltene Rauschfunktion von der Amplitudenfunktion abgezogen und als Fußpunkt der Schnittpunkt der interpolierten Pulsflanke mit der Nulllinie bestimmt wird, wobei die Objektentfernungen auf der Basis der Fußpunkte bestimmt werden. Mit "Nulllinie" ist hier der lokale mittlere Wert des Rauschens gemeint.

Die Flanken der Signalpulse werden hier dadurch bereinigt, dass die mit der Amplitudenfunktion oder SW-Amplitude zur Verfügung stehende Information genutzt wird. Diese auch als Rauschkompensation bezeichnete Maßnahme nutzt den Umstand aus, dass die Fußpunkte keine oder zumindest eine geringere Abhängigkeit von der Amplitude der Signalpulse aufweisen als die Schnittpunkte der Signalpulsflanken mit der Nachweis- bzw. SW-Schwelle, so dass zum einen eine höhere Genauigkeit erzielt und zum anderen der Einfluss der grundsätzlich unvermeidbaren Amplitudenabhängigkeit vermindert wird.

Ferner wird erfindungsgemäß vorgeschlagen, dass in der Amplitudenfunktion die Form der Signalpulse ausgewertet wird. Hierdurch lassen sich zusätzlich zu den Objektentfernungen weitere Informationen über die Objekte erhalten, an denen die ausgesandten Strahlungspulse reflektiert wurden. Die Form der Signalpulse wird insbesondere durch die Form, die Ausdehnung, die Struktur und die Oberflächenbeschaffenheit der reflektierenden Objekte beeinflusst, so dass aus der Form der Signalpulse Rückschlüsse auf die Art des Objektes gezogen werden können.

Erfindungsgemäß ist von besonderem Vorteil, dass die Signalpulse in der Amplitudenfunktion softwaremäßig vorliegen, wodurch zum einen überhaupt erst eine Analyse der Signalpulse hinsichtlich ihrer Pulsform ermöglicht wird und zum anderen auf einfache Weise die verschiedensten Auswerteverfahren zur Ermittelung der Pulsform angewendet werden können.

Die Mittelung der Einzelmessungen erfolgt vorzugsweise päckchenweise, indem zur Bildung von Päckchenmittelwerten nacheinander jeweils eine Anzahl von Einzelmessungen summiert und durch die Anzahl von Einzelmessungen dividiert wird. Durch den Begriff "Päckchen" wird hier zum Ausdruck gebracht, dass zur Bestimmung der Objektentfernungen eine Mehrzahl von Einzelmessungen herangezogen wird, d.h. um einen einzigen Wert für eine Objektentfernung zu erhalten, wird eine als Päckchen bezeichnete Mehrzahl von Einzelmessungen verwendet.

Die Objektentfernungen können jeweils aus einem einzigen Päckchenmittelwert bestimmt werden. Alternativ ist es möglich, über eine Mehrzahl von Päckchen zu mitteln und die Objektentfernungen aus dem hierdurch gebildeten Mittelwert zu bestimmen. Da bei dieser weiteren Mittelung eine größere Anzahl von Einzelmessungen berücksichtigt wird, lassen sich hierdurch Empfindlichkeit und Genauigkeit der Entfernungsmessung weiter verbessern. Ein weiterer Vorteil der Mittelung mehrerer Päckchen besteht darin, dass spezielle Mittelungsverfahren zum Einsatz kommen können, und zwar insbesondere solche, die bei der zur Päckchenbildung durchgeführten Mittelung der Einzelmessungen nicht anwendbar sind oder nicht angewendet werden sollen, z.B. aufgrund eines zu hohen Bedarfs an Rechenzeit.

Bei der im Folgenden auch einfach als Sensor bezeichneten erfindungsgemäßen Vorrichtung ist vorgesehen, dass der Empfänger einen Verstärker zur Erzeugung eines analogen Empfangssignals und eine Einrichtung mit wenigstens einer im Rauschen liegenden Schwelle umfasst, mit der aus dem analogen Empfangssignal eine Folge von logischen Pulsen erzeugbar ist, und dass dem Empfänger eine Auswerteeinrichtung zugeordnet ist, mit der für eine Mehrzahl von ausgesandten Strahlungspulsen aus Zeitpunkten, die den Flanken der logischen Pulse entsprechen, jeweils eine Einzelmessung erzeugbar und zum Nachweis von Veränderungen des Rauschens, die von den Signalpulsen hervorgerufen werden, eine Mittelung der jeweils die bestimmten Zeitpunkte umfassenden Einzelmessungen durchführbar ist.

Der Empfänger umfasst vorzugsweise ein zum Nachweis elektromagnetischer Strahlung ausgebildetes Element, das insbesondere in Form einer Fotodiode, vorzugsweise einer Fotodiode vom APD-Typ, vorgesehen ist. Der Sender umfasst zur Aussendung der Strahlungspulse vorzugsweise eine Laserdiode.

Die Einrichtung mit der wenigstens einen im Rauschen liegenden Schwelle umfasst bevorzugt wenigstens einen Komparator mit einer die Schwelle bildenden Referenz, wobei jedoch prinzipiell zur Erzeugung der logischen Pulse aus dem analogen Empfangssignal anstelle eines Komparators auch ein Begrenzungsverstärker (limiting amplifier) vorgesehen sein kann.

Zur Bestimmung von Zeitspannen, die jeweils von der Aussendung eines Strahlungspulses bis zu einem einer Flanke eines logischen Pulses entsprechenden Zeitpunkt verstreichen, ist bevorzugt ein Taktgeber zur Abgabe von Taktpulsen bekannter Breite mit bekannter Frequenz sowie ein Zähler vorgesehen, mit dem die während der Zeitspanne abgegebenen Taktpulse zählbar sind. Durch eine solche zentrale "Mess-Clock" kann die Zeitbasis des erfindungsgemäßen Entfernungsmessers festgelegt werden.

Die Messzeit ist in eine Vielzahl von aufeinander folgenden Zeitfenstern unterteilt, wobei die Auswerteeinrichtung wenigstens einen Zeitrasterspeicher umfasst, dessen Speicherzellen jeweils einem Zeitfenster zugeordnet sind.

Dabei ist vorgesehen, dass der Wert jeder Speicherzelle durch eine in das entsprechende Zeitfenster fallende Pulsflanke veränderbar ist, wobei vorzugsweise jede Speicherzelle durch eine aufsteigende Pulsflanke um einen Wert n erhöhbar und durch eine abfallende Flanke um den Wert n verminderbar ist, oder umgekehrt, wobei bevorzugt für n der Wert 1 vorgesehen ist.

Die Erzeugung und die Mittelung der Einzelmessungen sowie der Nachweis der Veränderungen des Rauschens sind bevorzugt mittels eines softwaregestützten Auswerteverfahrens durchführbar.

Die Auswerteeinrichtung umfasst vorzugsweise wenigstens einen IC-Baustein, in dem zumindest die Erzeugung der Einzelmessungen durchgeführt werden kann.

Ferner ist bevorzugt vorgesehen, dass die Auswerteeinrichtung wenigstens einen Prozessor und zumindest eine Schnittstelle zur Übertragung der erzeugten Einzelmessungen von dem IC-Baustein in den Prozessor umfasst, wobei zumindest die Mittelung der Einzelmessungen sowie der Nachweis der Veränderungen des Rauschens mittels des Prozessors und wenigstens eines Speichers durchführbar sind.

Der erfindungsgemäße Entfernungsmesser kann einen oder mehrere Messkanäle aufweisen. Im Fall einer Mehrkanal-Variante ist bevorzugt für jeden Kanal eine Empfangsdiode mit zugehörigem Verstärker und Komparator vorgesehen.

Ein besonderer Vorteil der Erfindung besteht darin, dass zur Realisierung eines zur Durchführung des erfindungsgemäßen Verfahrens geeigneten Sensors am prinzipiellen Grundaufbau herkömmlicher Sensoren keine grundsätzlichen Änderungen oder Erweiterungen vorgenommen werden müssen. Die Erfindung lässt sich prinzipiell mit herkömmlichen Komponenten realisieren, wobei es allerdings bevorzugt ist, einen speziell ausgebildeten IC-Baustein vorzusehen, mit dem zumindest die Erzeugung der Einzelmessungen durchgeführt werden kann.

Insbesondere erlaubt es die erst durch die Erfindung ermöglichte drastische Empfindlichkeitssteigerung, Sensoren zu realisieren, die im Vergleich zu herkömmlichen Sensoren wesentlich einfacher aufgebaut sind, kleinere Abmessungen besitzen und/oder kostengünstiger hergestellt werden können, ohne dabei auch nur geringfügige Einbußen bei der Leistungsfähigkeit, insbesondere bei der Empfindlichkeit, und allenfalls geringe Einbußen bei der Genauigkeit hinnehmen zu müssen.

Die Erfindung wird im Folgenden beispielhaft unter Bezugnahme auf die Zeichnung beschrieben. Es zeigen:

Fig. 1    schematisch den Aufbau einer Vorrichtung zur Entfernungsmessung gemäß einer Ausführungsform der Erfindung,

Fig. 2a-2c    am Beispiel einer Messung ohne Signal die analoge Messung selbst (Fig. 2a), die daraus abgeleitete logische Messung (Fig. 2b) sowie die daraus abgeleitete Einzelmessung (Fig. 2c),

Fig. 3a-3c    am Beispiel von zehn Einzelmessungen ohne Signal die zehn Einzelmessungen selbst (Fig. 3a), die Mittelung dieser zehn Einzelmessungen (Fig. 3b) und die aus der Mittelung durch Integration abgeleitete Software-Amplitude (Fig. 3c),

Fig. 4a-4b    beispielhaft die Integration einer Mittelung mehrerer Einzelmessungen (Fig. 4a) zur Software-Amplitude (Fig. 4b) in einem gegenüber Fig. 3 vergrößerten Maßstab, und

Fig. 5a-5f    am Beispiel einer Messung mit Signal das Signal selbst ohne Rauschen (Fig. 5a), eine analoge Messung, die Rauschen und das Signal enthält (Fig. 5b), die Software-Amplitude für eine einzige Einzelmessung (Fig. 5c), die durch Mittelung und Integration von 10 Einzelmessungen ermittelte Software-Amplitude (Fig. 5d), die durch Mittelung und Integration von 100 Einzelmessungen ermittelte Software-Amplitude (Fig. 5e) und die durch Mittelung und Integration von 1000 Einzelmessungen ermittelte Software-Amplitude (Fig. 5f).

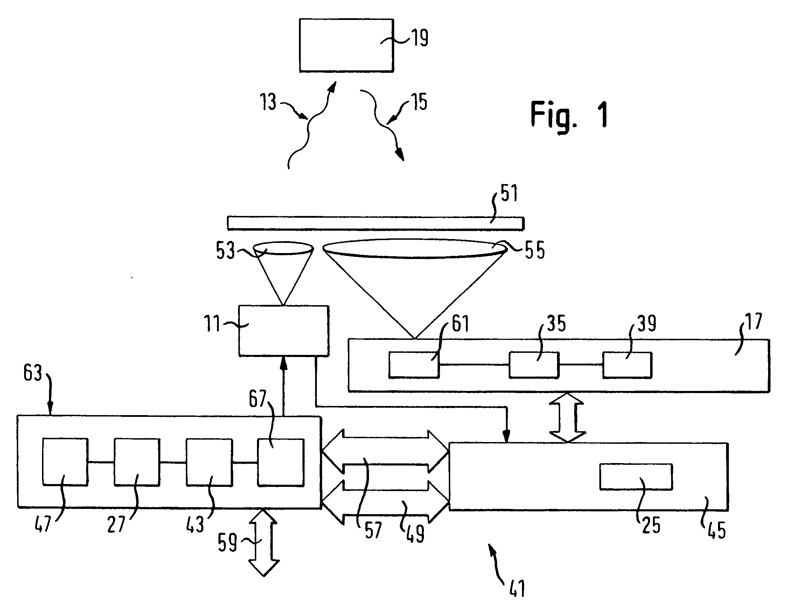

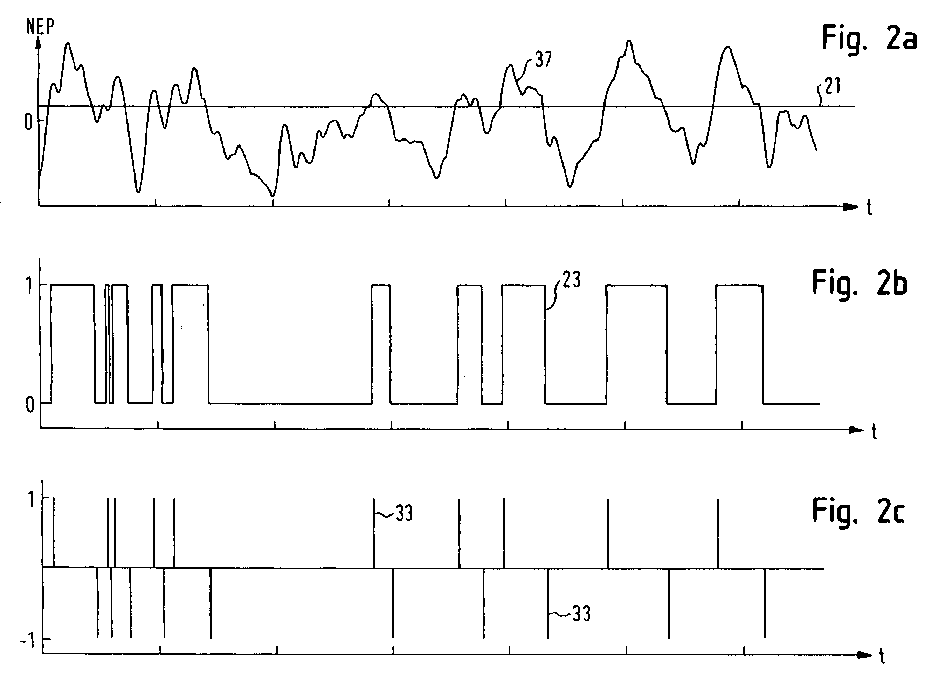

Zunächst soll anhand der Fig. 1-5 das Prinzip des erfindungsgemäßen Verfahrens erläutert werden, bevor auf Einzelheiten einer Entfernungsmessvorrichtung, mit der das erfindungsgemäße Verfahren durchgeführt werden kann, und auf praktische Anwendungen, die durch die Erfindung ermöglicht werden, näher eingegangen wird. Die Darstellungen der Fig. 2-5 wurden durch Simulationsrechnungen erhalten.

Fig. 1 zeigt schematisch eine erfindungsgemäße Vorrichtung zur Entfernungsmessung (Sensor), die zur Durchführung des erfindungsgemäßen Entfernungsmessverfahrens ausgebildet ist.

Der Sensor umfasst einen Sender 11 mit einer nicht dargestellten Laserdiode zur Aussendung gepulster elektromagnetischer Strahlung 13. Von innerhalb der Reichweite des Sensors gelegenen Objekten 19 reflektierte Signalpulse 15 gelangen auf eine Empfangsdiode 61 eines Empfängers 17 des Sensors, d.h. der Sendestrahl deckt das von der Empfangsdiode 61 bestimmte Sehfeld ab.

Eine dem Sender 11 zugeordnete Sendeoptik 53 sowie eine dem Empfänger 17 zugeordnete Empfangsoptik 55 sind hinter einer für die verwendete Strahlung durchlässigen Sensorabdeckung 51 angeordnet.

Der Empfangsdiode 61 ist ein Verstärker 35 sowie ein Komparator 39 nachgeordnet. Der Verstärker 35 liefert ein im Folgenden auch als analoge Messung bezeichnetes analoges Empfangssignal, das zusätzlich zu den empfangenen Signalen bzw. Signalpulsen Rauschen enthält, worauf nachstehend näher eingegangen wird.

Die im Folgenden auch als Hardware- oder HW-Schwelle bezeichnete Referenz des Komparators 39 ist in Abhängigkeit von dem jeweiligen Anwendungsfall eingestellt, insbesondere entsprechend der gewünschten Empfindlichkeit.

Mittels der HW-Schwelle wird aus dem analogen Empfangssignal des Verstärkers 35 eine Folge von logischen Pulsen erzeugt, die einem nachgeordneten IC-Baustein 45 des Sensors zugeführt werden, der Bestandteil einer Steuer- und Auswerteeinrichtung 41 des Sensors ist. Der IC-Baustein 45 umfasst einen Speicher 25, auf den nachstehend näher eingegangen wird. Der Speicher 25 dient dazu, so genannte Einzelmessungen zu speichern, die aus charakteristischen Zeitpunkten der analogen Messung bestehen, welche mittels des Komparators 39 aus der analogen Messung über die logischen Pulse abgeleitet werden.

Die mittels des Sensors zu bestimmende Objektentfernung wird durch Mittelung einer Mehrzahl derartiger Einzelmessungen erhalten. Hierzu ist dem IC-Baustein 45 über eine Parallelschnittstelle 49 ein Prozessorsystem 63 nachgeordnet, an welches die im Speicher 25 des IC-Bausteins 45 enthaltenen Einzelmessungen jeweils übertragen werden. Zwischen dem IC-Baustein 45 und dem Prozessorsystem 63 ist außerdem ein Shiftregister-Multiplexer vorgesehen.

Das Prozessorsystem 63 umfasst einen Mikroprozessor 47 zur Steuerung aller relevanten Operationen des Sensors, eine als Zeittaktgeber zur Festlegung einer Zeitbasis für die Laufzeitmessung dienende zentrale Mess-Clock 43, einen Zähler 67 zum Zählen der Zeittakte der Mess-Clock 43 sowie ein mehrere Zeitrasterspeicher, auf die nachstehend ebenfalls näher eingegangen wird, umfassendes Speichersystem 27, in dem die Mittelung der vom IC-Baustein 45 übertragenen Einzelmessungen erfolgt.

Über eine Schnittstelle 59 können die mit dem Prozessorsystem 63 ermittelten Objektentfernungen ausgegeben werden.

Der erfindungsgemäße Sensor kann als Mehrkanal-Variante ausgelegt sein, so dass eine Entfernungsmessung gleichzeitig in mehreren parallelen Messkanälen möglich ist. In diesem Fall umfasst der Empfänger 17 ein Array aus Empfangsdioden 61 und diesen zugeordneten Verstärkern 35 sowie Komparatoren 39, während der IC-Baustein 45 für jeden Messkanal einen Speicher 25 enthält und das Speichersystem 27 des Prozessorsystems 63 ebenfalls eine der Anzahl der Messkanäle entsprechende Zahl von identischen, parallel arbeitenden Speicheranordnungen aufweist. Im Fall eines solchen Mehrkanal-Sensors wird vorzugsweise der vom Sender 11 ausgesandte Sendestrahl 13 derart geformt, dass er die Sehfelder aller Empfangskanäle, also alle Empfangsdioden 61, abdeckt.

Da erfindungsgemäß die Entfernungsmessung durch Mittelung erfolgt, sollten während der Messung gleich bleibende Bedingungen herrschen, d.h. das Objekt sollte sich während der Messung weder verändern noch relativ zum Sensor bewegen, zumindest innerhalb eines Zeitraumes, der dazu ausreicht, so viele Strahlungspulse in Richtung des Objektes auszusenden, wie für die von den jeweiligen Gegebenheiten abhängige Mittelungstiefe erforderlich sind. Bevorzugte, aber keinesfalls ausschließliche Anwendungen der Erfindung betreffen folglich stehende oder starre Sensoren. Derartige Anwendungen werden auch als 1-dimensionale Anwendungen bezeichnet, da der Sensor lediglich in genau eine Richtung "blickt".

Die folgende Erläuterung des erfindungsgemäßen Messverfahrens, das mittels des vorstehend beschriebenen erfindungsgemäßen Sensors durchgeführt werden kann, bezieht sich auf Vorgänge in einem einzigen Messkanal. Bei einem Mehrkanal-Sensor laufen diese Vorgänge gleichzeitig in den parallelen Messkanälen ab.

Fig. 2a zeigt das zeitliche Verhalten des Ausgangssignals 37 eines an eine Empfangsdiode angeschlossenen Verstärkers, wenn die Empfangsdiode kein Signal empfängt, d.h. nicht mit elektromagnetischer Strahlung eines interessierenden Signals beaufschlagt wird. Fig. 2a zeigt somit das stets vorhandene Rauschen, das statistisch verteilte Rauschpulse umfasst, die oberhalb und unterhalb der Nulllinie liegen. Dabei entspricht die Nulllinie O NEP.

Das Ausgangssignal 37 des Verstärkers wird einem Komparator zugeführt, dessen im Folgenden als Hardware-Schwelle oder HW-Schwelle bezeichnete Referenz 21 auf einen Wert eingestellt ist, der innerhalb des Rauschens liegt, wie Fig. 2a zeigt. "Innerhalb des Rauschens" bedeutet insbesondere, dass die HW-Schwelle 21 zwischen -4,5 NEP und +4,5 NEP liegt. Die HW-Schwelle 21 kann z.B. bei 0 NEP liegen. Bei dieser Einstellung ist zwar einerseits die Nachweisempfindlichkeit, andererseits aber auch die Mittelungstiefe und damit die zum Nachweis eines Signals für die Mittelung benötigte Rechenzeit am größten. Eine Einstellung der HW-Schwelle 21 auf einen Wert unter 0 NEP ist erfindungsgemäß möglich. Ferner ist es möglich, die HW-Schwelle 21 auf einen Wert weit oberhalb von +4,5 NEP einzustellen, d.h. weit über das Rauschen zu legen. Auf diese Weise kann mit der Erfindung entsprechend der eingangs erläuterten Event-Messung gearbeitet werden, d.h. insofern kann die Event-Messung als ein Spezialfall des erfindungsgemäßen Verfahrens betrachtet werden.

Dass die HW-Schwelle 21 gemäß Fig. 2a im Rauschen liegt, bedeutet, dass die HW-Schwelle 21 von den Rauschpulsen mehrfach durchbrochen wird. Aufgrund der endlichen Steigung, welche die Flanken der Rauschpulse aufweisen, und der unterschiedlichen Amplituden der Rauschpulse hängen die Zeitpunkte 33 (Fig. 2c), an denen die HW-Schwelle 21 durchbrochen wird, von der Lage der HW-Schwelle 21 ab, genauer gesagt von der Relativlage zwischen der HW-Schwelle 21 und der analogen Messung 37.

Erfindungsgemäß wird aus der analogen Messung 37 gemäß Fig. 2a mit Hilfe der HW-Schwelle 21 des Komparators eine logische Messung erzeugt, die aus einer Folge von logischen Pulsen 23 gleicher Höhe besteht, wie es in Fig. 2b gezeigt ist. Die Flanken der logischen Pulse 23 liegen an den Zeitpunkten 33 (Fig. 2c), an denen die Flanken der Rauschpulse der analogen Messung 37 die HW-Schwelle 21 durchstoßen haben, wobei eine aufsteigende Flanke eines Rauschpulses einer aufsteigenden Flanke eines logischen Pulses 23 sowie eine abfallende Flanke eines Rauschpulses einer abfallenden Flanke eines logischen Pulses 23 entspricht.

Die Feinheit oder zeitliche Auflösung des erfindungsgemäßen Verfahrens ist also derart hoch, dass nicht nur das Überschreiten der HW-Schwelle 21 an sich detektiert und durch Erzeugen eines logischen Pulses 23 der weiteren Auswertung zugeführt, sondern weitaus mehr in der analogen Messung 37 steckende Information dadurch genutzt wird, dass zwischen einem Überschreiten und einem Unterschreiten der HW-Schwelle 21 durch die analoge Messung 37 unterschieden bzw. dass überhaupt detektiert wird, wann nach dem Überschreiten der HW-Schwelle 21 diese wieder unterschritten wird, oder umgekehrt. Folglich werden logische Pulse 23 erhalten, die eine unterschiedliche Breite aufweisen, wie Fig. 2b zeigt. Die Breite der logischen Pulse 23 bzw. die "Pausen" zwischen den logischen Pulsen 23 geben an, wie lange das analoge Empfangssignal 37 oberhalb bzw. unterhalb der HW-Schwelle 21 liegt.

Anschließend wird aus den logischen Pulsen 23 der logischen Messung gemäß Fig. 2b eine so genannte Einzelmessung erzeugt, indem die Zeitpunkte 33 der aufsteigenden und abfallenden Flanken der logischen Pulse 23 digitalisiert und in einer so genannten Event-Liste gespeichert werden. Diese Event-Liste stellt die in einer Einzelmessung enthaltene Information dar. Im Folgenden werden die aufsteigenden oder positiven Flanken auch als up-Events und die abfallenden oder negativen Flanken auch als down-Events bezeichnet.

Fig. 2c ist eine grafische Darstellung der gespeicherten, die Einzelmessung bildenden Event-Liste, wobei die nach oben weisenden, im Folgenden lediglich zur Veranschaulichung auch als "Nadeln" 33 bezeichneten Striche die up-Events und die nach unten weisenden Nadeln 33 die down-Events darstellen. Insofern kann die Einzelmessung gemäß Fig. 2c als die zeitliche Ableitung der von den logischen Pulsen 23 gebildeten logischen Messung, d.h. als durch Differentiation der logischen Messung erhalten betrachtet werden.

Die Erzeugung der Einzelmessung, also der Event-Liste, gemäß Fig. 2c erfolgt in einem IC-Baustein, der zur Speicherung der Event-Liste einen vergleichsweise kleinen, im Folgenden auch einfach als IC-Speicher bezeichneten Speicher aufweist, dessen Anzahl von Speicherplätzen lediglich in der Größenordnung der pro Einzelmessung erwarteten Rauschpulse liegt, d.h. größenordnungsmäßig der erwarteten Summe aus up-Events und down-Events entspricht. Für jedes Event wird ein Speicherplatz mit einer Zahl belegt, die dem Zählerstand des während der Messung die Takte der zentralen Mess-Clock (Fig. 1) zählenden Zählers entspricht. Damit enthalten die im Speicher des IC-Bausteins abgelegten Zahlen eine Zeitinformation, nämlich eine information über den Zeitpunkt des Auftretens des betreffenden up- bzw. down-Events bezüglich der Aussendung des die Einzelmessung startenden Strahlungspulses. Die gesamte Event-Liste gemäß Fig. 2c ist folglich im Speicher des IC-Bausteins als eine Menge von Zählerständen abgelegt. Zur Unterscheidung zwischen up-Events einerseits und down-Events andererseits ist der Speicher in zwei Speicherbereiche unterteilt.

Der die Einzelmessung darstellende Inhalt des Speichers des IC-Bausteins enthält also lediglich die Information, wann und in welcher Richtung die im Rauschen liegende HW-Schwelle 21 von den Rauschpulsen der analogen Messung 37 durchstoßen wurde.

Hierdurch wird erfindungsgemäß die bereits mehrfach erwähnte drastische Datenreduktion erzielt, da im weiteren Verlauf des Verfahrens zur Entfernungsmessung lediglich die jeweils zwar vergleichsweise wenig, dafür aber gerade die maßgebliche Information enthaltenen Einzelmessungen verwendet werden.

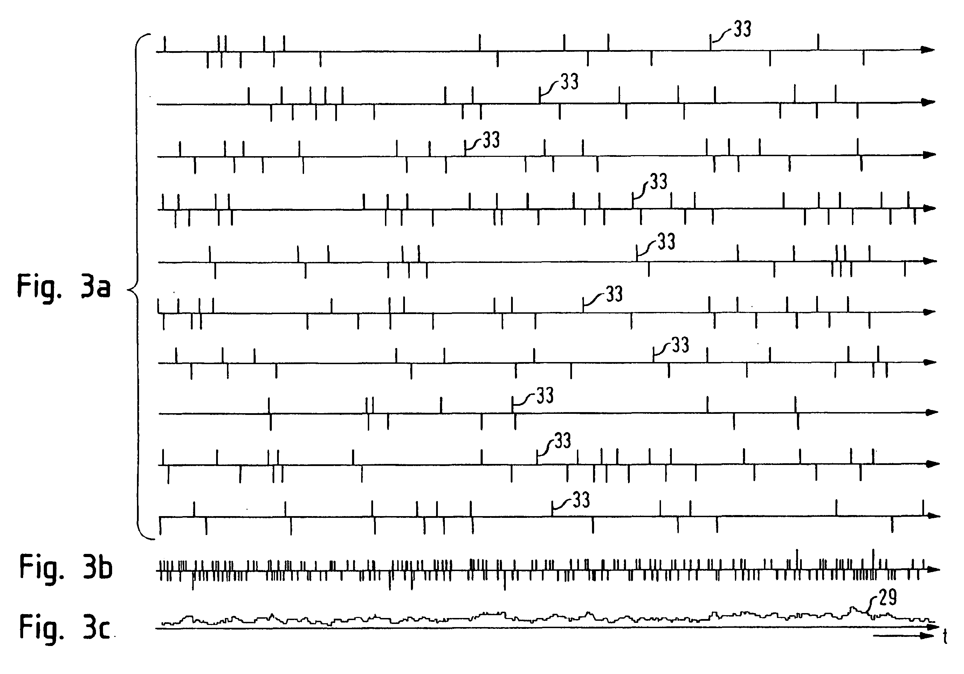

Die Mittelung von Einzelmessungen und eine anschließende Integration des Ergebnisses der Mittelung zu einer Software-Amplitude sind in Fig. 3 veranschaulicht.

Erfindungsgemäß erfolgt die Bestimmung der Objektentfernungen durch Mittelung einer Mehrzahl von zeitlich aufeinander folgenden Einzelmessungen, wobei jede Einzelmessung charakteristische Zeitpunkte 33 dessen repräsentiert, was nach Aussendung eines Strahlungspulses von der Empfangsdiode empfangen wurde. Dabei ist es zwar bevorzugt, nicht aber zwingend, dass die zu mittelnden Einzelmessungen aus den analogen Messungen unmittelbar aufeinander folgender ausgesandter Strahlungspulse erzeugt werden.

Die Mittelung der Einzelmessungen erfolgt nicht mehr in dem IC-Baustein, sondern in einem über eine Parallelschnittstelle mit dem IC-Baustein verbundenen Prozessorsystem, dem Zeitrasterspeicher zugeordnet sind.

Eine im IC-Baustein erzeugte Event-Liste wird anschließend sofort über die Parallelschnittstelle in einen Zeitrasterspeicher des Prozessorsystems übertragen, so dass der IC-Baustein zur Erzeugung der nächsten, insbesondere zu dem unmittelbar nachfolgend ausgesandten Strahlungspuls gehörenden Event-Liste bereit ist.

In den zur Mittelung der Einzelmessungen vorgesehenen Zeitrasterspeichern des Prozessorsystems entspricht jeweils jede Speicherzelle einem Zeitfenster endlicher Länge. Die Messzeit, während der die analoge Messung 37 erfolgt - also die Zeit, die von der Reichweite des Sensors bzw. von der maximalen Entfernung, aus der Signale erwartet werden, abhängt - ist somit in eine Vielzahl von aufeinander folgenden Zeitfenstern gleicher Länge unterteilt, d.h. es wird erfindungsgemäß mit einem Zeitraster gearbeitet, dessen Rasterung der Aufteilung der Zeitrasterspeicher entspricht. Die Anzahl von Speicherzellen des Zeitrasterspeichers ist wesentlich größer als die Anzahl von Speicherplätzen des IC-Speichers, da für die Dimensionierung des IC-Speichers lediglich die relativ geringe Anzahl der erwarteten Events, für den Zeitrasterspeicher dagegen die vergleichsweise große Anzahl von Zeitfenstern bestimmend ist.

Jedes Zeitfenster und damit jeder Speicherplatz des Zeitrasterspeichers entspricht einem Zählerstand des die up-Events und down-Events und damit die Event-Liste enthaltenden IC-Speichers, so dass der Inhalt des IC-Speichers eindeutig auf den Zeitrasterspeicher abgebildet werden kann, indem für jeden im IC-Speicher vorhandenen Zählerstand der Inhalt der betreffenden Speicherzelle des Zeitrasterspeichers um den Wert 1 verändert wird, wie nachfolgend näher beschrieben wird.

Fig. 3a zeigt zehn nacheinander erzeugte Einzelmessungen, wobei jede Einzelmessung über eine Folge logischer Pulse entsprechend Fig. 2b aus einer analogen Messung 37 entsprechend Fig. 2a abgeleitet wurde, die in diesem Beispiel lediglich Rauschen, d.h. kein Signal enthält. Aufgrund der statistischen Verteilung der Rauschpulse sind die aus den Rauschpulsen abgeleiteten, in Fig. 3a wieder durch die nach oben und unten ragenden Nadeln dargestellten up-Events und down-Events der Einzelmessungen zeitlich zufällig verteilt.

Die Wahrscheinlichkeit dafür, dass in einem Zeitfenster der mit Aussendung eines Strahlungspulses beginnenden Messzeit ein Event auftritt, ist also für alle Zeitfenster gleich groß, d.h. über alle Einzelmessungen betrachtet enthält jedes Zeitfenster die gleiche Anzahl von Events oder - anders ausgedrückt - die Nadeldichte ist zeitlich konstant, wobei dies in dieser Exaktheit nur für eine unendlich große Anzahl von gemittelten Einzelmessungen, also für eine unendlich große Mittelungstiefe gilt.

Das Beispiel der Fig. 3 weist lediglich eine Mittelungstiefe von zehn auf, so dass die Nadeldichte nicht exakt zeitlich konstant ist, wie Fig. 3b zeigt.

Je nach Feinheit des Zeitrasters, d.h. in Abhängigkeit von der Größe der Zeitfenster, ist es im Fall einer endlichen Mittelungstiefe mehr oder weniger wahrscheinlich, dass in ein Zeitfenster mehr als ein Event fällt. Dort, wo dies in dem Beispiel der Fig. 3 der Fall ist, wurde dies in Fig. 3b durch Nadeln doppelter Normallänge veranschaulicht.

Technisch realisiert wird die Mittelung der Einzelmessungen dadurch, dass die Einzelmessungen nacheinander in den gleichen Zeitrasterspeicher des Prozessorsystems eingebracht werden. Hierbei wird jeweils für ein in das i-te Zeitfenster fallendes Event die i-te Speicherzelle des Zeitrasterspeichers verändert, indem der Wert im Fall eines up-Events, also einer aufsteigenden Flanke, um 1 erhöht und im Fall eines down-Events, also im Fall einer abfallenden Flanke, um 1 vermindert wird.

Für jedes durch eine Speicherzelle des Zeitrasterspeichers repräsentierte Zeitfenster wird folglich während der Mittelung gezählt, wie oft in dieses Zeitfenster ein Event fällt, wobei up-Events positiv und down-Events negativ gewertet werden. Wenn lediglich Rauschen gemessen wird, d.h. wenn kein Signal vorhanden ist, dann ist im Fall einer unendlich großen Mittelungstiefe für jedes Zeitfenster das Auftreten von up-Events und down-Events gleich wahrscheinlich, so dass für diesen theoretischen Grenzfall am Ende der Mittelung wieder der Ausgangswert jeder Speicherzelle des Zeitrasterspeichers vorhanden wäre.

Da jede Einzelmessung gemäß Fig. 2c die zeitliche Ableitung der zugrunde liegenden logischen Messung gemäß Fig. 2b darstellt und ausschließlich Einzelmessungen gemittelt werden, findet die vorstehend erläuterte Mittelung gewissermaßen in der "differenzierten Welt" statt.

Die Rückkehr in die "reale Welt" erfolgt im Anschluss an die Mittelung durch Integration der gemittelten Einzelmessungen (Fig. 3b) zu einer so genannten Amplitudenfunktion 29, die in Fig. 3c dargestellt ist und im Folgenden auch als Software-Amplitude oder SW-Amplitude bezeichnet wird.

Bei der Integration wird für jedes Zeitfenster, also für jede Speicherzelle des Zeitrasterspeichers, die Summe aus dem Inhalt aller den früheren Zeitfenstern entsprechenden Speicherzellen und dem Inhalt der betreffenden Speicherzelle selbst gebildet, d.h. in die i-te Speicherzelle wird die Summe der Speicherzellen 1 bis i geschrieben. Jeder Summand ist nur dann von Null verschieden, wenn innerhalb des betreffenden Zeitfensters die Anzahl der aufgetretenen up-Events von der Anzahl der aufgetretenen down-Events verschieden ist, und der Wert eines von Null verschiedenen Summanden entspricht der mittleren Anzahl der überzähligen up-Events oder down-Events in dem betreffenden Zeitfenster, und zwar der mittleren Anzahl deshalb, da nicht jede Einzelmessung integriert wird, sondern die gemittelten Einzelmessungen, d.h. die Integration erfolgt nach der Mittelung.

Eine Umkehrung dieser Reihenfolge, d.h. eine Mittelung jeweils zuvor integrierter Einzelmessungen, würde zwar zu dem gleichen Ergebnis führen, da es sich bei der Mittelung und der Integration um lineare Rechenoperationen handelt, wäre jedoch mit einem erheblich größeren Rechenaufwand verbunden.

Die SW-Amplitude 29 gemäß Fig. 3c repräsentiert das Rauschen der analogen Messung 37 entsprechend Fig. 2a, wobei jedoch das Rauschen aufgrund der mit den Einzelmessungen durchgeführten Mittelung um einen von der Mittelungstiefe, also von der Anzahl der für die Mittelung verwendeten Einzelmessungen, abhängigen Faktor reduziert wurde. Bei einer unendlich großen Mittelungstiefe wäre die SW-Amplitude 29 gemäß Fig. 3c eine glatte horizontale Linie. Das Rauschen in der SW-Amplitude 29 kann daher als SW-Rauschen bezeichnet werden.

Für dieses Herabdrücken des Rauschens ist erfindungsgemäß lediglich ein vergleichsweise geringer Rechenaufwand erforderlich, da nur die den Flanken der logischen Pulse 23 (Fig. 2b) entsprechenden charakteristischen Zeitpunkte 33, welche die Einzelmessungen bilden, als Grundlage für die Mittelung verwendet werden, wobei außerdem die Mittelung nur das Addieren und Subtrahieren des Wertes 1 umfassende Operationen im Zeitrasterspeicher erfordert.

Das in Fig. 3b graphisch dargestellte Ergebnis der Mittelung der Mehrzahl von Einzelmessungen kann anschaulich als Päckchenmittelwert bezeichnet werden, wenn man die Mehrzahl der Einzelmessungen als Päckchen von Einzelmessungen betrachtet, d.h. die erfindungsgemäße Mittelung der Einzelmessungen somit päckchenweise erfolgt. Der Übergang zu der Amplitudenfunktion oder SW-Amplitude 29 gemäß Fig. 3c erfolgt dann durch Integration des gemittelten Päckchens von Einzelmessungen oder - anders ausgedrückt - durch Integration des Päckchenmittelwertes. Insgesamt wird hierdurch also der Takt für die Weiterbearbeitung des Zeitrasterspeichers um die Mittelungstiefe reduziert.

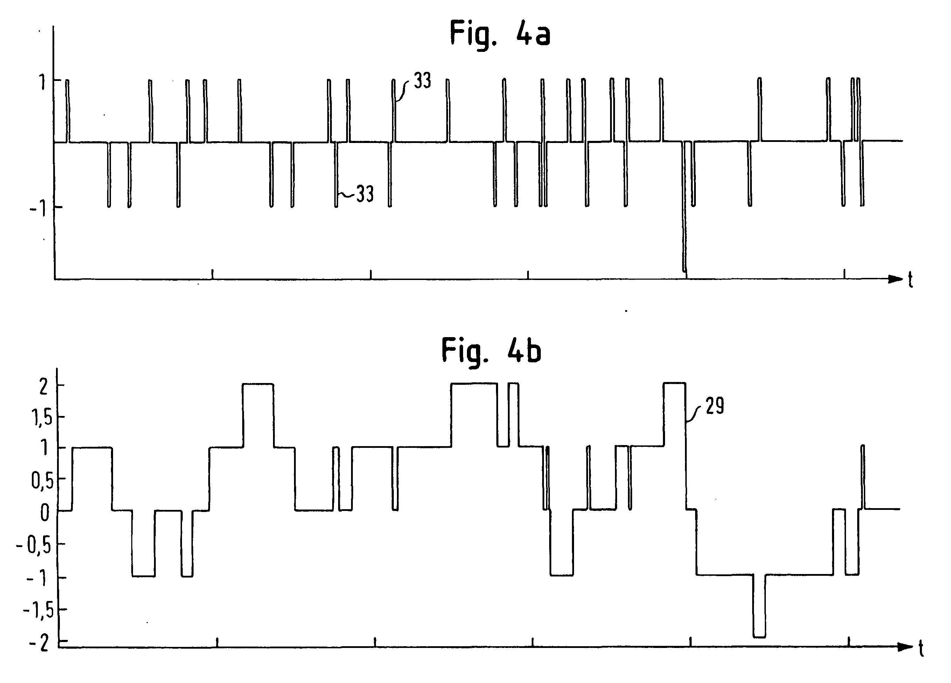

Aus dem Beispiel der Fig. 4 geht das vorstehend erläuterte Prinzip der Integration von gemittelten Einzelmessungen (Fig. 4a) zu einer SW-Amplitude 29 (Fig. 4b) deutlicher hervor.

Dass es sich bei Fig. 4a nicht um eine Einzelmessung, sondern um das Ergebnis einer Mittelung mehrerer Einzelmessungen handelt, ist bereits daran zu erkennen, dass mehrmals Events gleicher Orientierung, d.h. up-Events bzw. down-Events, unmittelbar aufeinander folgen, was bei einer aus einer realen analogen Messung abgeleiteten Einzelmessung naturgemäß nicht möglich ist, da dort einem up-Event ein down-Event folgen muss, und umgekehrt, wie man sich mit Hilfe von Fig. 2 leicht klarmachen kann.

Mit Ausnahme eines einzigen Zeitfensters hat jede Speicherzelle des die Mittelung gemäß Fig. 4a enthaltenden Zeitrasterspeichers den Wert 1. Die Ausnahme ist durch eine nach unten weisende Nadel mit doppelter Normallänge veranschaulicht, d.h. in dieses Zeitfenster fielen genau zwei down-Events, die innerhalb der Genauigkeit des Zeitrasters folglich zum gleichen Zeitpunkt, jeweils gerechnet ab Aussendung des zugehörigen Strahlungspulses, auftraten.

Für die SW-Amplitude 29 bedeutet dies, dass die bei der vorstehend in Verbindung mit Fig. 3b beschriebenen Integration gebildeten Summen sich zwischen zwei aufeinander folgenden Zeitfenstern nur ein einziges Mal nicht um den Wert 1 ändern. Diese Ausnahme ist eine Änderung um den Wert 2, der von dem vorstehend erwähnten, zwei down-Events enthaltenden Zeitfenster herrührt.

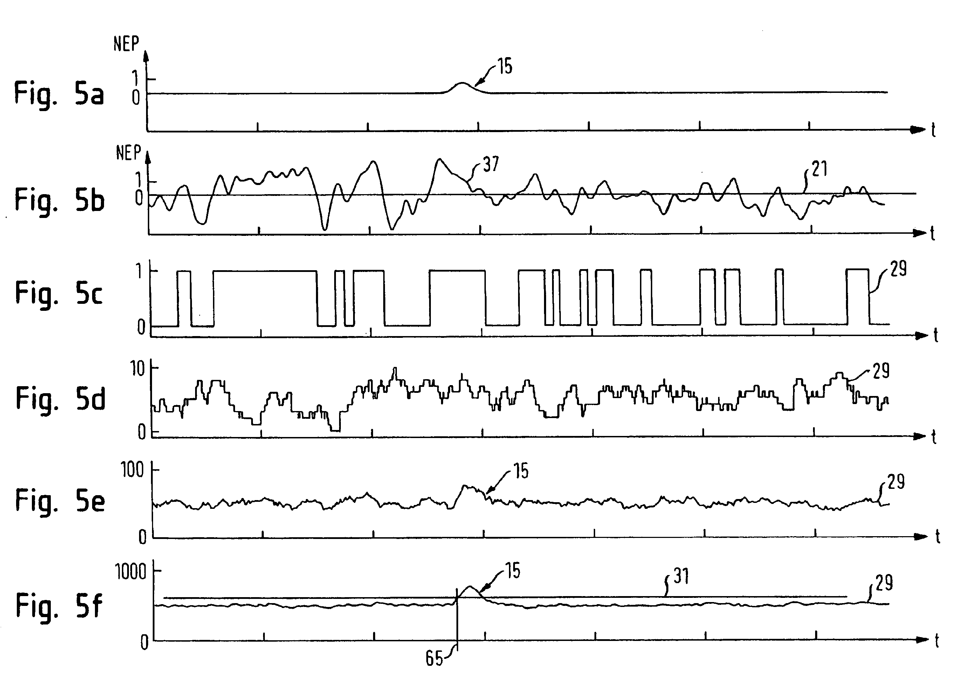

Fig. 5 zeigt, dass mittels des erfindungsgemäßen Verfahrens Signale nachgewiesen werden können, die im Rauschen liegen. Insbesondere können solche Signale nachgewiesen werden, deren maximale Amplitude deutlich kleiner als 4,5 NEP ist.

Ein derartiges Signal 15 ist in Fig. 5a in Form eines eine im Vergleich zur Messzeit kurze Dauer aufweisenden Signalpulses 15 ohne Rauschen dargestellt.

Fig. 5b zeigt eine analoge Messung 37 entsprechend Fig. 2a, wobei jedoch das Rauschen und das Signal 15 von Fig. 5a einander überlagert sind. Diese Überlagerung bedeutet, dass das Rauschen durch das Signal 15 verändert ist oder - mit anderen Worten - das Signal 15 im Rauschen enthalten ist. Das erfindungsgemäße Verfahren ermöglicht es, diese Veränderung des Rauschens und damit das Signal 15 nachzuweisen, obwohl das Signal 15 tief im Rauschen liegt und nicht aus den Rauschen heraus ragt.

Hierbei nutzt die Erfindung den Umstand, dass im zeitlichen Bereich des Signals 15 die analoge Messung 37 gegenüber einer reinen Rauschmessung ins Positive verschoben ist. Diese Verschiebung erhöht die Wahrscheinlichkeit dafür, dass im zeitlichen Bereich des Signals 15 die HW-Schwelle 21 überschritten wird, so dass dort - d.h. in den im zeitlichen Bereich des Signals 15 liegenden Zeitfenstern - im zeitlichen Mittel - also bei einer Mittelung aufeinander folgender Einzelmessungen - eine größere Anzahl von up-Events gefolgt von einer größeren Zahl von down-Events auftritt als in ausschließlich verrauschten Bereichen ohne Signal, in denen die Events statistisch verteilt sind.

Die für den Nachweis eines Signals 15 erforderliche Mittelungstiefe ist u.a. von der Höhe des Signals 15 abhängig. Dies wird durch die Fig. 5c-5f veranschaulicht, die SW-Amplituden 29 für unterschiedliche Mittelungstiefen zeigen.

Fig. 5c entspricht einer Mittelungstiefe von 1, d.h. die dargestellte SW-Amplitude 29 wurde durch Integration einer einzigen Einzelmessung erhalten. Für diesen Spezialfall ist die SW-Amplitude 29 mit der logischen Messung (Fig. 2b) identisch, an welcher es unmöglich wäre, ein Signal zu erkennen.

Die Fig. 5d, 5e und 5f zeigen SW-Amplituden 29 für Mittelungstiefen von 10, 100 bzw. 1.000. Mit zunehmender Mittelungstiefe wächst das Signal 15 immer weiter aus dem Rauschen heraus. Während bei einer Mittelungstiefe von 10 (Fig. 5d) das Signal 15 noch nicht erkennbar ist, liegt bei einer Mittelungstiefe von 100 (Fig. 5e) das Signal 15 bereits deutlich oberhalb des Rauschens. Bei einer Mittelungstiefe von 1.000 (Fig. 5f) ist das Rauschen bereits derart weit herabgedrückt, dass das Signal 15 eindeutig identifiziert werden kann.

Zur Bestimmung der Entfernung, an welchem sich das Objekt 19 befindet, von dem der ausgesandte Strahlungspuls 13 reflektiert und als Signalpuls 15 (Fig. 5a und 5f) empfangen wurde (Fig. 1), wird der Zeitpunkt des Beginns der vorderen Flanke des Signalpulses 15 benötigt, wenn die Entfernung unter Berücksichtigung der Lichtgeschwindigkeit aus der Zeitspanne berechnet wird, die zwischen der vorderen Flanke des ausgesandten Strahlungspulses 13 und der vorderen Flanke des Signalpulses 15 verstreicht.

Um den das Ende dieser Zeitspanne bildenden Zeitpunkt zu bestimmen, wird auf die SW-Amplitude 29 eine im Folgenden auch als Nachweisschwelle 31 bezeichnete Software-Schwelle oder SW-Schwelle angewendet, die in Fig. 5f beispielhaft eingezeichnet ist. Diese Nachweisschwelle 31 ist insofern eine SW-Schwelle 31, als ihre Anwendung auf die SW-Amplitude 29 im Rahmen des im Mikroprozessor ablaufenden softwaregestützten Auswerteverfahrens erfolgt.

Aus demjenigen Zeitpunkt 65, an dem die vordere Flanke des Signalpulses 15 die Nachweisschwelle 31 durchstößt, kann unter Verwendung der Lichtgeschwindigkeit die gesuchte Objektentfernung berechnet werden. Da die Bestimmung dieses Zeitpunktes 65 aus dem Schnittpunkt der vorderen Flanke des Signalpulses 15 und der SW-Schwelle 31 softwaremäßig erfolgt, wird der Zeitpunkt 65 auch als Software- oder SW-Event bezeichnet.

Um die Genauigkeit der Entfernungsmessung zu erhöhen, kann im Rahmen des softwaregestützten Auswerteverfahrens der Umstand ausgenutzt werden, dass die SW-Amplitude 29 noch mehr Information enthält, die bislang unberücksichtigt geblieben ist. Hierauf wird nachstehend näher eingegangen.

Ein Vorteil der Erfindung ist, dass beliebig kleine Signale 15 nachgewiesen werden können, da die HW-Schwelle 21 beliebig weit ins Rauschen hinein gelegt werden und beispielsweise auch bei 0 NEP liegen kann. Ein Herabsetzen der HW-Schwelle 21 erhöht lediglich die Anzahl der aus der analogen Messung 37 erhaltenen Rauschpulse und damit die Anzahl der aus den logischen Pulsen 23 der logischen Messung (Fig. 2b) abgeleiteten Events 33 pro Einzelmessung, was eine Erhöhung der Mittelungstiefe erforderlich macht, um das Rauschen so weit herabzudrücken, dass in der SW-Amplitude 29 das Signal 15 ausreichend weit aus dem (SW-)Rauschen herausragt, um die SW-Schwelle 31 (Fig. 5f) anwenden zu können. Bei der Überlegung, wie die SW-Schwelle 31 in Abhängigkeit von der gewünschten Empfindlichkeitssteigerung gegenüber der eingangs erläuterten Event-Messung einzustellen sei, damit in der SW-Amplitude 29 die Signale 15 durch Anwenden der SW-Schwelle 31 mit ausreichender Sicherheit vom Rauschen getrennt werden können, wurde erfindungsgemäß basierend auf statistischen Überlegungen festgestellt, dass sich eine einfache Einstellregel angeben lässt, die wie folgt lautet:

$$\text{SW-Schwelle} = p \cdot m + 4{,}5\sqrt{m \cdot p(1-p)} \; .$$

Hierin bedeuten:

$m$: Mittelungstiefe bei der Mittelung der Einzelmessungen

$p = P(HWs_{min})$: Wahrscheinlichkeit dafür, mit einer HW-Schwelle von $HWs_{min}$ und einer Mittelungstiefe von m in der SW-Amplitude Rauschpulse zu detektieren, wobei

$$P \approx 1 - \int_{-\infty}^{S_{min}} f(x)dx \, , \; 1$$

mit

f(x) = Normalverteilungsdichte,

$S_{min}$ = minimales Signal für eine als "sicher" definierte Messung, das bei der 9-fachen Standardabweichung liegt, also bei 9 NEP im Fall der Event-Messung bzw. bei 9 σ (σ = Standardabweichung) bezüglich des Rauschens der SW-Amplitude im Fall des erfindungsgemäßen Verfahrens, und $HWs_{min}$ = 4,5 NEP/E, wobei E die gegenüber der Event-Messung geforderte Empfindlichkeitssteigerung ist und $m = E^2$ gilt.

In die erfindungsgemäße Einstellregelung für die SW-Schwelle 31 geht folglich als Definition von "ausreichend sicher" ein, dass ein Signal ausreichend sicher nachgewiesen wird, d.h. Fehlsignale ausreichend sicher vermieden werden, wenn das Signal bei der 9-fachen Standardabweichung bezüglich des Rauschens liegt, und wonach der Nachweis von Rauschen ausreichend sicher vermieden wird, wenn die HW-Schwelle das 4,5-fache der Standardabweichung bezüglich des Rauschens beträgt.

Bei einer geforderten Empfindlichkeitssteigerung gegenüber der Event-Messung von z.B. E = 8 ergibt sich mit einer Mittelungstiefe von $m = E^2 = 64$ ein Wert für die SW-Schwelle von etwa 35 und liegt in der SW-Amplitude der mittlere Wert der Verteilung des Rauschens bei etwa 18 mit einer Standardabweichung von etwa σ = 3,62 (18 + 4,5 · 3,62 ≈ 35). Dabei ist der Werte- oder Ergebnisbereich der SW-Schwelle durch die möglichen Ergebnisse der 64 Einzelmessungen von 0 bis 64 vorgegeben, wobei noch keine Normierung des Ergebnisbereiches vorgenommen wurde.

Ein weiterer Vorteil des erfindungsgemäßen Verfahrens besteht darin, dass es unabhängig von der Form der nachzuweisenden Signale 15 ist. Nicht nur im Vergleich zur Messzeit kurze Signalpulse 15, sondern auch breite Signale mit über ihre Dauer beliebig geformter Amplitude können durch das erfindungsgemäße Verfahren nachgewiesen werden. Ein derartiges breites Signal hebt das Rauschen in dem betreffenden zeitlichen Bereich entsprechend seiner Amplitude insgesamt an, so dass für jedes Zeitfenster gegenüber einer reinen Rauschmessung die Wahrscheinlichkeit für das Auftreten von Events erhöht ist. Die SW-Amplitude ist dann in diesem zeitlichen Bereich eine in Abhängigkeit von der Mittelungstiefe mehr oder weniger glatte Funktion, die gegenüber der Lage einer reines Rauschen repräsentierenden SW-Amplitude um ein der Amplitude des breiten Signals entsprechendes Maß nach oben verschoben ist.

Ferner ist erfindungsgemäß von Vorteil, dass eine beliebige Anzahl von während der Messzeit nacheinander auftretenden Signalen nachgewiesen werden kann. Jede durch ein Signal hervorgerufene Veränderung des Rauschens führt in der SW-Amplitude 29 zu einem mittels der SW-Schwelle 31 nachweisbaren Signal 15, wie aus Fig. 5 unmittelbar ersichtlich ist. Das erfindungsgemäße Verfahren ist daher automatisch mehrechofähig.

Wie im Einleitungsteil bereits erwähnt, kann die Bandbreite der Amplitudenfunktion 29 herabgesetzt werden, indem eine Glättung durch horizontale Mittelung durchgeführt wird, z.B. indem in der Amplitudenfunktion 29 jeweils über eine vorgegebene Anzahl aufeinander folgender Zeitfenster gemittelt wird. Bei den in Fig. 5c-5f dargestellten Amplitudenfunktionen 29 ist eine solche Glättung jeweils noch nicht vorgenommen worden. Durch die Glättung kann das nach der Mittelung noch verbliebene SW-Rauschen gegenüber dem Signal 15 noch weiter herabgesetzt werden. Hierdurch kann eine weitere Steigerung der Empfindlichkeit erzielt werden, da lediglich das Rauschen geglättet wird, das Signal dagegen - sofern es breiter als die Glättungszeit ist - hinsichtlich der Höhe unverändert bleibt.

Wie vorstehend bereits erwähnt, kann ferner ausgehend von der Amplitudenfunktion 29 durch eine als Rauschkompensation bezeichnete weitere softwaremäßig durchführbare Maßnahme die Genauigkeit der Entfernungsmessung verbessert werden, indem als Basis für die den Signalpuls 15 betreffende Laufzeitmessung nicht der SW-Event 65, also nicht der Schnittpunkt der vorderen oder aufsteigenden Flanke des Signalpulses 15 mit der SW-Schwelle 31 (Fig. 5f) verwendet wird. Vielmehr wird bei der Rauschkompensation im Bereich des SW-Events 65 eine Extrapolation des Rauschens durchgeführt, wodurch eine Rauschfunktion erhalten wird, die anschließend von der Amplitudenfunktion 29 lokal im Bereich der vorderen Flanke abgezogen wird. In der auf diese Weise im Bereich des Signalpulses 15 vom Rauschen bereinigten Amplitudenfunktion 29 kann nunmehr durch Extrapolieren der vorderen oder aufsteigenden Flanke des Signalpulses 15 deren Schnittpunkt mit der Nulllinie, also mit dem mittleren Wert des Rauschens, bestimmt werden. Dieser Schnittpunkt dient dann als derjenige signifikante Fußpunkt, auf dessen Basis die Objektentfernung berechnet wird. Diese Rauschkompensation kann auch an der hinteren oder abfallenden Flanke des Signalpulses 15 durchgeführt werden.

Die Entfernungsberechnung erfolgt dadurch, dass diejenige Zeitspanne gemessen wird, die von der Aussendung des betreffenden Strahlungspulses 13 (Fig. 1), insbesondere von dessen vorderer Flanke, bis zu dem vorstehend erwähnten signifikanten Fußpunkt verstreicht, wobei hierzu mit einem Zähler die Anzahl der von der zentralen Mess-Clock 43 (Fig. 1) abgegebenen Clock- oder Taktpulse gezählt wird. Aus der bekannten Breite und Frequenz dieser Taktpulse kann dann die verstrichene Zeitspanne zwischen ausgesandtem Strahlungspuls 13 und empfangenem Signalpuls 15 ermittelt und unter Ausnutzung der Lichtgeschwindigkeit die entsprechende Objektentfernung berechnet werden.

In einer an dieser Stelle lediglich als Beispiel genannten möglichen Konfiguration eines erfindungsgemäßen Sensors, mit dem das erfindungsgemäße Messverfahren durchgeführt werden kann, ist folgendes vorgesehen:

Der erfindungsgemäße Sensor besitzt einen Empfangskanal. Als Sender der elektromagnetischen Strahlung wird eine Pulslaserdiode mit einer Wellenlänge des emittierten Lichtes von 905 nm verwendet. Die Pulsbreite der ausgesandten Strahlungspulse beträgt ca. 5 ns. Die Leistung beträgt 40 W. Als Empfangsdiode wird eine APD mit dem Faktor 80 verwendet. Als Verstärker kommt ein Breitbandverstärker mit kapazitiver Kopplung zum Einsatz.

Die Puls-Wiederholrate ist 10 kHz, so dass die Zeit zwischen zwei unmittelbar aufeinander folgenden ausgesandten Strahlungspulsen 0,1 ms beträgt.

Als Reichweite bei der eingangs erläuterten Event-Messung ergäbe sich mit der obigen Konfiguration und mit einem Durchmesser der sammelnden Optik von 50 mm sowie einer Reflektivität des Zielobjektes, dessen Entfernung gemessen werden soll, von ca. 5% unter Berücksichtigung von typischem Sonnenlicht und typischer atmosphärischer Dämpfung ca. 82 m.

Soll die Empfindlichkeit z.B. um den Wert 8 gesteigert werden, so müssen 64 Einzelmessungen zu einer Messung gemittelt werden. Als Minimum-Signal für einen sicheren Nachweis wird ein Signal von 9 NEP angenommen. Die zugehörige HW-Schwelle müsste von 4,5 NEP auf etwa 0,56 NEP herabgesetzt werden, um das 8-fach kleinere Signal nach der Mittelung sicher detektieren zu können. Bei 0,56 NEP ist die Wahrscheinlichkeit, einen Rauschpuls zu detektieren, ca. 0,287 gegenüber von 0,5 bei 0 NEP. Geht man mit diesen Werten in die entsprechenden Binominalverteilungen, so ergibt sich für die SW-Amplitude $\sigma = 3,62$. Dabei ist der Wertebereich für die SW-Amplitude 0 bis 64, und zwar entsprechend der möglichen Ergebnisse bei 64 Ereignissen. Der Mittelwert liegt bei 18,37. Um nun eine sichere Messung im Softwarebereich, d.h. in der SW-Amplitude, zu erreichen, muss die SW-Schwelle auf 35 eingestellt werden, wie vorstehend bereits dargelegt wurde.

Mit dieser Auslegung eines Sensors würde man eine Reichweite von ca. 220 m erreichen, da eine Empfindlichkeitssteigerung um den Faktor E lediglich mit dem Faktor $\sqrt{E}$ in die Erhöhung der Reichweite eingeht und Abschläge aufgrund anderer in der Praxis auftretender Effekte, z.B. atmosphärischer Dämpfung, berücksichtigt wurden.

Auf dieser Strecke von 220 m würden im Mittel ca. 100 Rauschpulse mit einer mittleren Breite von ca. 6 ns detektiert werden, wenn der Empfänger eine Bandbreite von ca. 200 MHz und einen Tiefpass 3. Ordnung aufweist.

Jede Einzelmessung würde also aus ca. 100 up-Events und 100 down-Events bestehen, die als Eventliste im IC-Speicher gespeichert werden. Als Speichergröße würden 200 mal 2 Byte ausreichen, weil die größte zu speichernde Zahl in 2 Byte passen würde. Im IC-Baustein würde also ein Speicher der Größe 400 Byte ausreichen.

Die SW-Amplitude entsteht durch Integration der gemittelten Einzelmessung, die insgesamt aus ca. 12.800 Events besteht. Verwendet man einen Zähler mit einer Zählfrequenz von 1,5 GHz, so repräsentiert ein Zeitfenster im Zeitraster eine Entfernungsdifferenz von 0,1 m. Für 220 m Entfernung wären 2.200 Zeitrasterplätze, also Speicherzellen im Zeitrasterspeicher, erforderlich, so dass jeder Zeitrasterplatz im Mittel mit ca. 2,9 mal "+1" und 2,9 mal "-1" gefüllt wäre. Die statistische Fluktuation dieser Füllung ergibt die tatsächliche Füllzahl. Die erforderliche Speichergröße beträgt 2.200 Byte.

Als Messzeit ergibt sich 64 * 0,1 ms = 6,4 ms, womit eine Messrate von 156 Hz dargestellt werden kann.

Der nach dem erfindungsgemäßen Verfahren arbeitende erfindungsgemäße Sensor bewältigt die Messung dieser Pulsmenge bestehend aus ca. 100 Rausch- und Signalpulsen und verarbeitet die Ergebnisse zu Entfernungen, wobei eine Empfindlichkeitssteigerung von 8 und eine Reichweitensteigerung von etwa $\sqrt{8} \approx 2{,}8$ gegenüber der Event-Messung erzielt werden.

Vor allem die drastische Empfindlichkeitssteigerung, aber auch die praktisch unbegrenzte Mehrecho-Fähigkeit sowie die Möglichkeit der Pulsformanalyse von in Abhängigkeit von der Konfiguration des Zielobjektes deformierten Pulsen, die durch die Erfindung bereitgestellt werden, eröffnen eine Fülle von neuen Anwendungsmöglichkeiten, die bislang nicht realisierbar waren.

So kann z.B. aufgrund der höheren Empfindlichkeit senderseitig ohne Empfindlichkeitseinbußen die optische Leistung reduziert werden, indem anstelle einer Laserdiode eine LED als Sendeelement verwendet wird. Alternativ kann als Sendeelement eine CW-Laserdiode im Pulsbetrieb eingesetzt werden, die zur Aussendung von im für das menschliche Auge sichtbaren Bereich liegender elektromagnetischer Strahlung ausgelegt sein kann. Diese Maßnahmen können zu einer erheblichen Kostenreduzierung bei der Herstellung des Sensors führen.

Eine alternativ oder zusätzlich mögliche Maßnahme, mit der ebenfalls die Herstellungskosten reduziert werden können, besteht empfangsseitig in der Verwendung von PIN-Dioden als Empfangselemente, die anstelle von Dioden vom APD-Typ eingesetzt werden können.

Des Weiteren können Sensoren mit einer reduzierten Leistungsaufnahme realisiert werden. Die Erfindung ermöglicht insbesondere die Herstellung von Sensoren, die mit einer vergleichsweise geringen Betriebsspannung von z.B. 5 V auskommen.

Eine weitere Möglichkeit, die mit der Erfindung erzielbare Empfindlichkeitssteigerung in vorteilhafter Weise zu nutzen, besteht darin, die optischen Einrichtungen des Sensors zu verkleinern, indem z.B. die empfängerseitigen optischen Flächen reduziert werden. Auf diese Weise wird die durch die Erfindung gewonnene Empfindlichkeitssteigerung zur Verkleinerung des Sensors genutzt, wobei die ursprüngliche, auf optischen Einrichtungen in Normalgröße basierende Leistungsfähigkeit des Sensors erhalten bleibt.

Während derartige Maßnahmen - sofern überhaupt realisierbar - bei herkömmlichen Sensoren wenigstens eine dramatische Reduzierung der Reichweite zur Folge hätten, wird die Reichweite nicht beeinträchtigt, wenn diese Maßnahmen in Verbindung mit der Erfindung erfolgen, da die aus diesen Maßnahmen resultierenden Verluste in der Reichweite durch die erfindungsgemäß erzielbare Empfindlichkeitssteigerung zumindest kompensiert werden können.

Des Weiteren sind durch die Erfindung bestimmte Anwendungen einer Entfernungsmessung überhaupt erst möglich oder zumindest wesentlich besser durchführbar.

Zu erwähnen sind hier beispielsweise Entfernungsmessungen bei belasteter Atmosphäre oder bei verschmutzten optischen Flächen des Sensors. Eine Belastung der Atmosphäre kann z.B. durch Nebel erfolgen. Ein erfindungsgemäßer Sensor kann als Nebeldetektor dienen, da nicht nur aufgrund der hohen Empfindlichkeit und der unbegrenzten Mehrecho-Fähigkeit sowie der Möglichkeit zur Pulsformanalyse Nebel überhaupt detektierbar ist, sondern durch die erfindungsgemäße Möglichkeit zur Auswertung der Form der empfangenen Signalpulse außerdem solche Pulsformen erkannt werden können, die für Nebel charakteristisch sind.

Des Weiteren kann die Erfindung grundsätzlich auch in Verbindung mit Scannern eingesetzt werden, d.h. an Sensoren, mit denen in einer oder mehreren Abtastebenen jeweils Strahlungspulse nacheinander in unterschiedliche Winkelrichtungen ausgesandt und für jeden ausgesandten Strahlungspuls die reflektierten Signalpulse hinsichtlich ihrer Laufzeit und ihrer Winkelrichtung ausgewertet werden. Je geringer die Scanfrequenz ist, d.h. je langsamer sich die jeweiligen Komponenten eines von der Erfindung Gebrauch machenden Scanners drehen, desto größer kann die Mittelungstiefe gewählt werden, da dann der Scanner umso länger zumindest näherungsweise in die gleiche Richtung "blickt" und damit das gleiche Objekt "anvisieren" kann.

Bezugszeichenliste

| | |
|---|---|
| 11 | Sender |
| 13 | ausgesandte Strahlung |
| 15 | Signalpuls |
| 17 | Empfänger |
| 19 | Objekt |
| 21 | Schwelle des Empfängers, HW-Schwelle |
| 23 | logischer Puls der logischen Messung |
| 25 | Speicher |
| 27 | Speichersystem, Zeitrasterspeicher |
| 29 | Amplitudenfunktion, SW-Amplitude |
| 31 | Nachweisschwelle, SW-Schwelle |
| 33 | Zeitpunkt einer Einzelmessung, Event |
| 35 | Verstärker |
| 37 | analoges Empfangssignal, analoge Messung |
| 39 | Einrichtung mit Schwelle, Komparator |
| 41 | Steuer- und Auswerteeinrichtung |
| 43 | Taktgeber, Mess-Clock |
| 45 | IC-Baustein |
| 47 | Mikroprozessor |
| 49 | Schnittstelle |
| 51 | Abdeckung |
| 53 | Sendeoptik |
| 55 | Empfangsoptik |
| 57 | Shiftregister-Multiplexer |
| 59 | Schnittstelle |
| 61 | Empfangsdiode |
| 63 | Prozessorsystem |
| 65 | SW-Event |
| 67 | Zähler |

**Patentansprüche**

1.  Verfahren zur Entfernungsmessung, bei dem mit wenigstens einem Sender (11) gepulste elektromagnetische Strahlung (13) ausgesandt wird und reflektierte Signalpulse (15) mit wenigstens einem Empfänger (17) nachgewiesen werden, wobei die Entfernungen von Objekten (19), an denen die ausgesandten Strahlungspulse (13) reflektiert werden, durch Bestimmen der Pulslaufzeit gemessen werden,
    wobei mit dem Empfänger (17) ein analoges Empfangssignal (37) gemessen wird, das zusätzlich zu den Signalpulsen (15) Rauschen enthält,
    wobei Zeitpunkte (33) bestimmt werden, an denen jeweils eine im Rauschen liegende Schwelle (21) des Empfängers (17) durchbrochen wird,
    wobei durch Mittelung einer Mehrzahl von jeweils die bestimmten Zeitpunkte (33) umfassenden Einzelmessungen die Signalpulse (15) nachgewiesen werden, und
    wobei mittels der im Rauschen liegenden Schwelle (21) des Empfängers (17) aus dem analogen Empfangssignal (37), in welchem das Rauschen und die Signalpulse (15) einander überlagert sind, eine Folge von logischen Pulsen (23) erzeugt wird, aus der die Einzelmessung abgeleitet wird,
    **dadurch gekennzeichnet,**
    **dass** die Flanken der logischen Pulse (23) als Zeitpunkte (33) der Einzelmessung verwendet werden,
    **dass** die Mittelung der Einzelmessungen in wenigstens einem Zeitrasterspeicher (27) durchgeführt wird, wobei die entsprechende Speicherzelle des Zeitrasterspeichers (27) im Fall einer aufsteigenden Pulsflanke um einen Wert n erhöht und im Fall einer abfallenden Flanke um den Wert n vermindert wird, oder umgekehrt, wobei bevorzugt für n der Wert 1 verwendet wird,

**dass** bei der Mittelung der Einzelmessungen ein Zeitraster verwendet wird, in dem die Messzeit in eine Vielzahl von aufeinander folgenden Zeitfenstern unterteilt ist, wobei jedem Zeitfenster eine Speicherzelle des Zeitrasterspeichers (25, 27) zugeordnet ist,

wobei für jedes Zeitfenster die Anzahl von Durchbrechungen der Schwelle (21) des Empfängers (17) vorzeichenrichtig gezählt und durch die Anzahl der Einzelmessungen dividiert wird, oder für jedes Zeitfenster bei jeder Durchbrechung der Schwelle (21) des Empfängers (17) die entsprechende Speicherzelle des Zeitrasterspeichers (27) um einen durch die Anzahl der Einzelmessungen dividierten Wert vorzeichenrichtig verändert wird, und

zwischen Zeitpunkten (33), an denen die Schwelle (21) des Empfängers (17) überschritten wird, und Zeitpunkten (33), an denen die Schwelle (21) des Empfängers (17) unterschritten wird, unterschieden wird, wobei ein Zeitpunkt (33) einer Überschreitung positiv und ein Zeitpunkt (33) einer Unterschreitung negativ gewertet wird, oder umgekehrt,

**dass** im Anschluss an die Mittelung der Einzelmessungen der Mittelwert zu einer Amplitudenfunktion (29) integriert wird, wobei bei der Integration für jedes Zeitfenster die Summe aus dem Inhalt aller den früheren Zeitfenstern entsprechenden Speicherzellen und dem Inhalt der betreffenden Speicherzelle selbst gebildet wird, und

**dass** zum Nachweis der Signalpulse (15) auf die Amplitudenfunktion (29) eine Nachweisschwelle (31) angewendet und in der Amplitudenfunktion (29) für die Signalpulse (15) jeweils die zugehörige Objektentfernung auf der Basis wenigstens eines Zeitpunktes (65) bestimmt wird, an dem die Nachweisschwelle (31) durchbrochen wird.

2.  Verfahren nach Anspruch 1,
    **dadurch gekennzeichnet,**
    **dass** für jeden ausgesandten Strahlungspuls (13) eine Einzelmessung erzeugt wird.

3.  Verfahren nach Anspruch 1 oder 2,
    **dadurch gekennzeichnet,**
    **dass** die Erzeugung und die Mittelung der Einzelmessungen sowie der Nachweis der Veränderungen des Rauschens hervorrufenden Signalpulse (15) mittels eines softwaregestützten Auswerteverfahrens erfolgen.

4.  Verfahren nach einem der vorhergehenden Ansprüche,
    **dadurch gekennzeichnet,**
    **dass** die Zeitpunkte (33) der Einzelmessung in wenigstens einen Speicher (25, 27) eingebracht werden.

5.  Verfahren nach einem der vorhergehenden Ansprüche,
    **dadurch gekennzeichnet,**
    **dass** die Zeitpunkte (33) der Einzelmessung-zunächst in einem Speicher (25), insbesondere einem Speicher eines IC-Bausteins (45), zwischengespeichert und anschließend in einen weiteren Speicher (27), insbesondere einen Zeitrasterspeicher, übertragen werden, wobei in dem weiteren Speicher (27) die Zeitpunkte (33) in einer ihre jeweilige Zeitinformation berücksichtigenden Anordnung abgelegt werden.

6.  Verfahren nach einem der vorhergehenden Ansprüche,
    **dadurch gekennzeichnet,**
    **dass** für alle zu mittelnden Einzelmessungen der gleiche Zeitrasterspeicher (27) verwendet wird.

7.  Verfahren nach einem der vorhergehenden Ansprüche,
    **dadurch gekennzeichnet,**
    **dass** die Bandbreite der Amplitudenfunktion (29) herabgesetzt wird, indem vorzugsweise in der Amplitudenfunktion (29) jeweils über eine vorgegebene Anzahl aufeinander folgender Zeitfenster gemittelt wird.

8.  Verfahren nach einem der vorhergehenden Ansprüche,
    **dadurch gekennzeichnet,**
    **dass** die Nachweisschwelle (31) in Abhängigkeit von einem Faktor eingestellt wird, um den die Schwelle (21) des Empfängers (17) gegenüber einem Wert von 4,5 NEP reduziert wird.

9.  Verfahren nach Anspruch 8,
    **dadurch gekennzeichnet,**
    **dass** die Nachweisschwelle (31) aus einer den Faktor enthaltenden Rechenvorschrift berechnet wird.

10. Verfahren nach einem der vorhergehenden Ansprüche,
    **dadurch gekennzeichnet,**

**dass** in der Amplitudenfunktion (29) zur Bestimmung von Fußpunkten der Signalpulse (15) jeweils im Bereich der aufsteigenden und/oder abfallenden Flanke des Signalpulses (15) eine Extrapolation des Rauschens durchgeführt, eine hierbei erhaltene Rauschfunktion von der Amplitudenfunktion (29) abgezogen und als Fußpunkt der Schnittpunkt der interpolierten Pulsflanke mit dem mittleren Wert des Rauschens bestimmt wird, wobei die Objektentfernungen auf der Basis der Fußpunkte bestimmt werden.

11. Verfahren nach einem der vorhergehenden Ansprüche,
**dadurch gekennzeichnet,**
**dass** in der Amplitudenfunktion (29) die Form der Signalpulse (15) ausgewertet wird.

12. Verfahren nach einem der vorhergehenden Ansprüche,
**dadurch gekennzeichnet,**
**dass** die Mittelung der Einzelmessungen päckchenweise erfolgt, indem zur Bildung von Päckchenmittelwerten nacheinander jeweils über eine Anzahl von Einzelmessungen summiert und durch die Anzahl von Einzelmessungen dividiert wird.

13. Verfahren nach Anspruch 12,
**dadurch gekennzeichnet,**
**dass** die Objektentfernungen aus einem einzigen Päckchenmittelwert bestimmt werden.

14. Verfahren nach Anspruch 12,
**dadurch gekennzeichnet,**
**dass** über eine Mehrzahl von Päckchen gemittelt wird und die Objektentfernungen aus dem hierdurch gebildeten Mittelwert bestimmt werden.

15. Verfahren nach einem der vorhergehenden Ansprüche,
**dadurch gekennzeichnet,**
**dass** eine Vorrichtung gemäß einem der nachstehenden Ansprüche verwendet wird.

16. Vorrichtung, eingerichtet zur Durchführung des Verfahrens zur Entfernungsmessung gemäß einem der Ansprüche 1 bis 14, mit wenigstens einem Sender (11) zur Aussendung gepulster elektromagnetischer Strahlung (13) und mit wenigstens einem Empfänger (17) zum Nachweis von reflektierten Signalpulsen (15),
wobei der Empfänger (17) einen Verstärker (35) zur Erzeugung eines analogen Empfangssignals (37) und eine Einrichtung (39) mit wenigstens einer im Rauschen liegenden Schwelle (21) umfasst, mit der aus dem analogen Empfangssignal (37) eine Folge von logischen Pulsen (23) erzeugbar ist,
wobei dem Empfänger (17) eine Auswerteeinrichtung (41) zugeordnet ist, mit der für eine Mehrzahl von ausgesandten Strahlungspulsen (13) aus Zeitpunkten (33), die den Flanken der logischen Pulse (23) entsprechen, jeweils eine Einzelmessung erzeugbar und zum Nachweis von Veränderungen des Rauschens, die von den Signalpulsen (15) hervorgerufen werden, eine Mittelung der jeweils die bestimmten Zeitpunkte (33) umfassenden Einzelmessungen durchführbar ist, wobei die Messzeit in eine Vielzahl von aufeinander folgenden Zeitfenstern unterteilt ist und die Auswerteeinrichtung (41) wenigstens einen Zeitrasterspeicher (27) umfasst, dessen Speicherzellen jeweils einem Zeitfenster zugeordnet sind,
wobei der Wert jeder Speicherzelle durch eine in das entsprechende Zeitfenster fallende Pulsflanke veränderbar ist, wobei jede Speicherzelle durch eine aufsteigende Pulsflanke um einen Wert n erhöhbar und im Fall einer abfallenden Flanke um den Wert n verminderbar ist, oder umgekehrt, wobei bevorzugt für n der Wert 1 vorgesehen ist, und.

17. Vorrichtung nach Anspruch 16,
**dadurch gekennzeichnet,**
**dass** die Einrichtung mit der im Rauschen liegenden Schwelle (21) wenigstens einen Komparator (39) oder wenigstens einen Begrenzungsverstärker (limiting amplifier) umfasst.

18. Vorrichtung nach Anspruch 16 oder 17,
**dadurch gekennzeichnet,**
**dass** zur Bestimmung von Zeitspannen, die jeweils von der Aussendung eines Strahlungspulses (13) bis zu einem einer Flanke eines logischen Pulses (23) entsprechenden Zeitpunkt (33) verstreichen, ein Taktgeber (43) zur Abgabe von Taktpulsen bekannter Breite mit bekannter Frequenz sowie ein Zähler vorgesehen sind, mit dem die während der Zeitspanne abgegebenen Taktpulse zählbar sind.

**19.** Vorrichtung nach einem der Ansprüche 16 bis 18,
**dadurch gekennzeichnet,**
**dass** die Erzeugung und die Mittelung der Einzelmessungen sowie der Nachweis der Veränderungen des Rauschens mittels eines softwaregestützten Auswerteverfahrens durchführbar sind.

**20.** Vorrichtung nach einem der Ansprüche 16 bis 19,
**dadurch gekennzeichnet,**
**dass** die Auswerteeinrichtung (41) wenigstens einen IC-Baustein (45) umfasst, in dem zumindest die Erzeugung der Einzelmessungen durchführbar ist.

**21.** Vorrichtung nach Anspruch 20,
**dadurch gekennzeichnet,**
**dass** die Auswerteeinrichtung (41) wenigstens einen Mikroprozessor (47) und zumindest eine Schnittstelle (49) zur Übertragung der erzeugten Einzelmessungen von dem IC-Baustein (45) in den Mikroprozessor (47) umfasst, wobei zumindest die Mittelung der Einzelmessungen sowie der Nachweis der Veränderungen des Rauschens mittels des Mikroprozessors (47) und wenigstens eines Speichers (27) durchführbar sind.

**Claims**

**1.** A method of distance measurement, wherein pulsed electromagnetic radiation (13) is transmitted using at least one transmitter (11) and reflected signal pulses (15) are detected using at least one receiver (17), wherein the distances from objects (19) at which the transmitted radiation pulses (13) are reflected are measured by determining the pulse transit time,
wherein an analog received signal (37) is measured by the receiver (17), said analog received signal containing noise in addition to the signal pulses (15),
wherein points in time (33) are determined at which a respective threshold (21) of the receiver (17) lying in the noise is passed through,
wherein the signal pulses (15) are detected by averaging a plurality of individual measurements respectively comprising the specific points in time (33), and
wherein a sequence of logical pulses (23), from which the individual measurement is derived, is generated by means of the threshold (21) of the receiver (17) lying in the noise from the analog received signal (37) in which the noise and the signal pulses (15) are superimposed on one another,
**characterized in that**
the flanks of the logical pulses (23) are used as points in time (33) of the individual measurement,
**in that** the averaging of the individual measurements is carried out in at least one time pattern memory (27), with the corresponding memory cell of the time pattern memory (27) being increased by a value n in the case of a rising pulse flank and being reduced by the value n in the case of a falling flank, or vice versa, with the value 1 preferably being used for n.
**in that** a time pattern is used in the averaging of the individual measurements in which the measurement time is divided into a plurality of sequential time windows, with a memory cell of the time pattern memory (25, 27) being associated with each time window, wherein the number of passing throughs of the threshold (21) of the receiver (17) is counted with the correct sign for each time window and is divided by the number of individual measurements, or the corresponding memory cell of the time pattern memory (27) is changed with the correct sign by a value divided by the number of individual measurements for each time window on each passing through of the threshold (21) of the receiver (17), and
a distinction is made between points in time (33) at which the threshold (21) of the receiver (17) is exceeded and points in time (33) at which the threshold (21) of the receiver (17) is fallen below, with a point in time (33) of an exceeding being evaluated as positive and a point in time (33) of a falling below being evaluated as negative, or vice versa,
**in that** the average value is integrated to an amplitude function (29) subsequent to the averaging of the individual measurements,
wherein the sum of the content of all the memory cells corresponding to the earlier time windows and of the content of the respective memory cell itself is formed for each time window on the integration, and
**in that** a detection threshold (31) is applied to the amplitude function (29) for the detection of the signal pulses (15) and the respective associated object distance is determined in the amplitude function (29) for the signal pulses (15) on the basis of at least one point in time (65) at which the detection threshold (31) is passed through.

**2.** A method in accordance with claim 1,
**characterized in that**
an individual measurement is generated for each transmitted radiation pulse (13).

**3.** A method in accordance with claim 1 or claim 2,
**characterized in that**
the generation and the averaging of the individual measurements as well as the detection of the signal pulses (15) causing changes in the noise take place by means of a software-assisted evaluation method.

**4.** A method in accordance with any one of the preceding claims, **characterized in that** the points in time (33) of the individual measurement are introduced into at least one memory (25, 27).

**5.** A method in accordance with any one of the preceding claims,
**characterized in that**
the points in time (33) of the individual measurement are first buffered in a memory (25), in particular in a memory of an IC component (45), and are subsequently transferred to a further memory (27), in particular to a time pattern memory, with the points in time (33) being stored in the further memory (27) in an arrangement taking their respective time information into account.

**6.** A method in accordance with any one of the preceding claims,
**characterized in that**
the same time pattern memory (27) is used for all individual measurements to be averaged.

**7.** A method in accordance with any one of the preceding claims,
**characterized in that**
the bandwidth of the amplitude function (29) is reduced **in that** averaging is preferably carried out in the amplitude function (29) in each case over a predetermined number of sequential time windows.

**8.** A method in accordance with any one of the preceding claims,
**characterized in that**
the detection threshold (31) is set in dependence on a factor by which the threshold (21) of the receiver (17) is reduced with respect to a value of 4.5 NEP.

**9.** A method in accordance with claim 8,
**characterized in that**
the detection threshold (31) is calculated from a calculation specification containing the factor.

**10.** A method in accordance with any one of the preceding claims,
**characterized in that**,
in the amplitude function (29) for the determination of nadirs of the signal pulses (15), in each case in the region of the rising flank and/or falling flank of the signal pulse (15), an extrapolation of the noise is carried out, a noise function obtained in this process is deducted from the amplitude function (29) and the point of intersection of the interpolated pulse flank with the average value of the noise is determined as the nadir, with the object distances being determined on the basis of the nadirs.

**11.** A method in accordance with any one of the preceding claims,
**characterized in that**
the shape of the signal pulses (15) is evaluated in the amplitude function (29).

**12.** A method in accordance with any one of the preceding claims,
**characterized in that**
the averaging of the individual measurements takes place packet-wise **in that** a summing is carried out sequentially in each case via a number of single individual measurements and a division is made by the number of individual measurements for the formation of packet average values.

**13.** A method in accordance with claim 12,
**characterized in that**
the object distances are determined from a single packet average value.

**14.** A method in accordance with claim 12,
**characterized in that**
averaging is carried out over a plurality of packets and the object distances are determined from the average value hereby formed.

**15.** A method in accordance with any one of the preceding claims,
**characterized in that**
an apparatus in accordance with any one of the following claims is used.

**16.** An apparatus configured for carrying out the method of distance measurement in accordance with any one of the claims 1 to 14, having at least one transmitter (11) for the transmission of pulsed electromagnetic radiation (13) and having at least one receiver (17) for the detection of reflected signal pulses (15),
wherein the receiver (17) comprises an amplifier (35) for the generation of an analog received signal (37) and a device (39) having at least one threshold (21) lying in the noise with which a sequence of logical pulses (23) can be generated from the analog received signal (37),
wherein an evaluation device (41) is associated with the receiver (17) with which a respective individual measurement can be generated for a plurality of transmitted radiation pulses (13) from points in time (33) which correspond to the flanks of the logical pulses (23) and an averaging of the individual measurements respectively comprising the determined points in time (33) can be carried out for the detection of changes in the noise which are caused by the signal pulses (15),
wherein the measurement time is divided into a plurality of sequential time windows and the evaluation device (41) comprises at least one time pattern memory (27) whose memory cells are each associated with a time window,
wherein the value of each memory cell is changeable by a pulse flank falling into the corresponding time window, with each memory cell being able to be increased by a rising pulse flank by a value n and, in the case of a falling flank, being able to be reduced by the value n, or vice versa, with the value 1 preferably being provided for n.

**17.** An apparatus in accordance with claim 16,
**characterized in that**
the device with the threshold (21) lying in the noise comprises at least one comparator (39) or at least one limiting amplifier.

**18.** An apparatus in accordance with claim 16 or claim 17,
**characterized in that**
a clock (43) for the emission of cycle pulses of a known width with a known frequency and a counter with which the cycle pulses emitted during a time period are provided for the determination of time periods which respectively elapse from the transmission of a radiation pulse (13) up to a point in time (33) corresponding to a flank of a logical pulse (23).

**19.** An apparatus in accordance with any one of the claims 16 to 18,
**characterized in that**
the generation and the averaging of the individual measurements as well as the detection of the changes in the noise can be carried out by means of a software-assisted evaluation method.

**20.** An apparatus in accordance with any one of the claims 16 to 19,
**characterized in that**
the evaluation device (41) comprises at least one IC component (45) in which at least the generation of the individual measurements can be carried out.

**21.** An apparatus in accordance with claim 20,
**characterized in that**
the evaluation unit (41) comprises at least one microprocessor (47) and at least one interface (49) for the transmission of the generated individual measurements from the IC component (45) into the microprocessor (47), with at least the averaging of the individual measurements as well as the detection of the changes in the noise being able to be carried out by means of the microprocessor (47) and by means of at least one memory (27).

**Revendications**

1. Procédé pour la mesure de distance, dans lequel un rayonnement (13) électromagnétique pulsé est émis avec au moins un émetteur (11) et des impulsions de signal réfléchies (15) sont mises en évidence avec au moins un récepteur (17), et les distances d'objets (19), sur lesquels les impulsions de rayonnement émises (13) sont réfléchies, sont mesurées par détermination du temps de parcours des impulsions,

   dans lequel on mesure avec le récepteur (17) un signal de réception analogique (17) qui contient un bruit additionnellement aux impulsions de signal (15),

   dans lequel on détermine des instants (33) auxquels un seuil (21) du récepteur (17) situé dans le bruit est respectivement traversé,

   et en calculant une moyenne d'une pluralité de mesures individuelles incluant respectivement les instants déterminés (33), on met en évidence les impulsions de signal (15), et

   dans lequel on génère, au moyen du seuil (21), situé dans le bruit, du récepteur (17) et à partir du signal de réception analogique (37), dans lequel le bruit et les impulsions de signal (15) sont mutuellement superposés, une succession d'impulsions logiques (23) à partir de laquelle on dérive la mesure individuelle,

   **caractérisé en ce que**

   les flancs des impulsions logiques (23) sont utilisés comme instants (33) de la mesure individuelle,

   **en ce que** le calcul de la moyenne des mesures individuelles est exécuté dans au moins une mémoire à trame temporelle (27), de telle façon que la cellule de mémoire correspondante de la mémoire à trame temporelle (27) est augmentée d'une valeur n dans le cas d'un flanc d'impulsion montant et est réduite de la valeur n dans le cas d'un flanc descendant, ou inversement, et on utilise de préférence la valeur 1 pour n,

   **en ce que** lors du calcul de la moyenne des mesures individuelles on utilise une trame temporelle dans laquelle le temps de mesure est subdivisé en une pluralité de fenêtres temporelles mutuellement successives, et à chaque fenêtre temporelle est associée une cellule de mémoire de la mémoire à trame temporelle (25, 27), dans lequel pour chaque fenêtre temporelle on compte le nombre des traversées du seuil (21) du récepteur (17) de manière correcte vis-à-vis du signe et on le divise par le nombre des mesures individuelles, ou bien pour chaque fenêtre temporelle et à chaque traversée du seuil (21) du récepteur (17) on modifie la cellule de mémoire correspondante de la mémoire à trame temporelle (27) d'une valeur divisée par le nombre des mesures individuelles et de manière correcte vis-à-vis du signe, et

   on fait une différence entre des instants (33) auxquels on passe au-dessus du seuil (21) du récepteur (17), et des instants (33) auxquels on passe au-dessous du seuil (21) du récepteur (17), de manière à évaluer positivement un instant (33) de passage au-dessus et négativement un instant (33) de passage au-dessous, ou inversement,

   **en ce qu'**à la suite du calcul de la moyenne des mesures individuelles, on intègre la valeur moyenne pour donner une fonction d'amplitude (29), en formant lors de l'intégration et pour chaque fenêtre temporelle la somme du contenu de toutes les cellules de mémoire correspondant aux fenêtres temporelles antérieures et du contenu de la cellule de mémoire concernée elle-même, et

   pour mettre en évidence les impulsions de signal (15) on applique un seuil de mise en évidence (31) à la fonction d'amplitude (29) et l'on détermine dans la fonction d'amplitude (29) pour les impulsions de signal (15) respectivement la distance associée d'un objet sur la base d'au moins un instant (65) auquel le seuil de mise en évidence (31) est traversé.

2. Procédé selon la revendication 1,
   dans lequel on engendre une mesure individuelle pour chaque impulsion de rayonnement émise (13).

3. Procédé selon la revendication 1 ou 2,
   **caractérisé en ce que** la génération et le calcul de la moyenne des mesures individuelles ainsi que la mise en évidence des impulsions de signal (15) provoquant des modifications du bruit ont lieu au moyen d'un procédé d'évaluation appuyé par un logiciel.

4. Procédé selon l'une des revendications précédentes,
   **caractérisé en ce que** les instants (33) de mesures individuelles sont introduits dans au moins une mémoire (25, 27).

5. Procédé selon l'une des revendications précédentes,
   **caractérisé en ce que** les instants (33) de mesures individuelles sont mémorisés temporairement tout d'abord dans une mémoire (25), en particulier une mémoire d'un composant un circuit intégré (45), et sont transmis ensuite dans une autre mémoire (27), en particulier une mémoire à trame temporelle, et on dépose les instants (33) dans l'autre mémoire (27) dans un agencement qui tient compte de leur information temporelle respective.

**6.** Procédé selon l'une des revendications précédentes, **caractérisé en ce que** l'on utilise la même mémoire à trame temporelle (27) pour toutes les mesures individuelles dont on calcule la moyenne.

**7.** Procédé selon l'une des revendications précédentes, **caractérisé en ce que** la largeur de bande de la fonction d'amplitude (29) est réduite, en procédant de préférence dans la fonction d'amplitude (29) à une moyenne respectivement sur un nombre prédéterminé de fenêtres temporelles mutuellement successives.

**8.** Procédé selon l'une des revendications précédentes, **caractérisé en ce que** le seuil de mise en évidence (31) est réglé en fonction d'un facteur à raison duquel le seuil (21) du récepteur (17) est réduit par rapport à une valeur de 4,5 NEP.

**9.** Procédé selon la revendication 8, **caractérisé en ce que** le seuil de mise en évidence (31) est calculé à partir d'une règle de calcul contenant le facteur.

**10.** Procédé selon l'une des revendications précédentes, **caractérisé en ce que**, pour la détermination des points de pied des impulsions de signal (15) on exécute dans la fonction d'amplitude (29) et respectivement dans la région des flancs montant et/ou des flancs descendant de l'impulsion de signal (15), à une extrapolation du bruit, on soustrait de la fonction d'amplitude (29) une fonction de bruit ainsi obtenue, et en détermine à titre de point de pied le point d'intersection du flanc d'impulsion interpolé avec la valeur moyenne du bruit, et on détermine les distances des objets sur la base des points de pieds.

**11.** Procédé selon l'une des revendications précédentes, **caractérisé en ce que** l'on évalue la forme des impulsions de signal (15) dans la fonction d'amplitude (29).

**12.** Procédé selon l'une des revendications précédentes, **caractérisé en ce que** le calcul de la moyenne des mesures individuelles a lieu par paquets, **en ce que**, pour la formation des valeurs moyennes de paquets on additionne respectivement les unes après les autres un certain nombre de mesures individuelles et on les divise par le nombre de mesures individuelles.

**13.** Procédé selon la revendication 12, **caractérisé en ce que** les distances des objets sont déterminées à partir d'une unique valeur moyenne de paquets.

**14.** Procédé selon la revendication 12, **caractérisé en ce que** l'on calcule une moyenne sur une pluralité de paquets et on détermine les distances des objets à partir de la valeur moyenne ainsi formée.

**15.** Procédé selon l'une des revendications précédentes, **caractérisé en ce que** l'on utilise un dispositif selon l'une des revendications suivantes.

**16.** Dispositif, organisé pour mettre en oeuvre le procédé pour la mesure de distance selon l'une des revendications 1 à 14, comprenant au moins un émetteur (11) pour émettre un rayonnement électromagnétique pulsé (13) et au moins un récepteur (17) pour la mise en évidence d'impulsions de signal réfléchies (15), dans lequel le récepteur (17) comprend un amplificateur (35) pour engendrer un signal de réception analogique (37) et un dispositif (39) avec au moins un seuil (21) situé dans un bruit, au moyen duquel une succession d'impulsions logiques (23) peut être engendrée à partir du signal de réception analogique (37), dans lequel une unité d'évaluation (41) est associée au récepteur (17), avec laquelle il est possible d'engendrer une mesure individuelle respective pour une pluralité d'impulsions de rayonnement émises (13) à partir d'instants (33) qui correspondent aux flancs des impulsions logiques (23), et, pour mettre en évidence des modifications du bruit qui sont provoquées par les impulsions de signal (15) il est possible de calculer une moyenne des mesures individuelles incluant les instants (33) déterminés, dans lequel le temps de mesure est subdivisé en une pluralité de fenêtres temporelles mutuellement successives et l'unité d'évaluation (41) comprend au moins une mémoire à trame temporelle (27) dont les cellules de mémoire sont associées respectivement à une fenêtre temporelle, dans lequel la valeur de chaque cellule de mémoire est susceptible d'être modifiée par un flanc d'impulsion qui tombe dans la fenêtre temporelle correspondante, et chaque cellule de mémoire est augmentée d'une valeur n par un flanc d'impulsion montant et est réduite de la valeur n dans le cas d'un flanc descendant, ou inversement, et dans lequel la valeur 1 est de préférence prévue pour n.

17. Dispositif selon la revendication 16,
**caractérisé en ce que** le dispositif comportant le seuil (21) situé dans le bruit comprend au moins un comparateur (39) ou au moins un amplificateur limiteur ("limiting amplifier")

18. Dispositif selon la revendication 16 ou 17,
**caractérisé en ce que** pour déterminer des périodes temporelles, qui s'écoulent respectivement depuis l'émission d'une impulsion de rayonnement (13) jusqu'à un instant (33) correspondant à un flanc d'une impulsion logique (23), on prévoit un générateur de cadence (43) pour délivrer des impulsions cadencées de largeur connue avec une fréquence connue, ainsi qu'un compteur au moyen duquel il est possible de compter les impulsions de cadences délivrées pendant la période temporelle.

19. Dispositif selon l'une des revendications 16 à 18,
**caractérisé en ce que** la génération et le calcul de moyenne des mesures individuelles ainsi que la mise en évidence des modifications du bruit sont susceptibles d'être exécutés au moyen d'un procédé d'évaluation appuyé sur un logiciel.

20. Dispositif selon l'une des revendications 16 à 19,
**caractérisé en ce que** l'unité d'évaluation (41) inclut au moins un composant à circuits intégrés (45), dans lequel il est possible d'exécuter au moins la génération des mesures individuelles.

21. Dispositif selon la revendication 20,
**caractérisé en ce que** l'unité d'évaluation (41) comprend au moins un microprocesseur (47) et au moins une interface (49) pour transmettre les mesures individuelles engendrées depuis le composant à circuits intégrés (45) jusque dans le microprocesseur (47), et au moins le calcul de moyenne des mesures individuelles ainsi que la mise en évidence des modifications du bruit sont susceptibles d'être exécutés au moyen du microprocesseur (47) et d'au moins une mémoire (27).

Fig. 1

Fig. 2a

Fig. 2b

Fig. 2c

EP 1 522 870 B1

Fig. 3a

Fig. 3b

Fig. 3c

Fig. 4a

Fig. 4b

EP 1 522 870 B1

Fig. 5a

Fig. 5b

Fig. 5c

Fig. 5d

Fig. 5e

Fig. 5f

EP 1 522 870 B1

**EP 1 522 870 B1**

**IN DER BESCHREIBUNG AUFGEFÜHRTE DOKUMENTE**

**In der Beschreibung aufgeführte Patentdokumente**

- US 2003035097 A1
- EP 0805359 A2
- WO 02088772 A1